(19) Europäisches Patentamt
European Patent Office
Office européen des brevets

(11) **EP 2 339 531 B1**

(12) **EUROPÄISCHE PATENTSCHRIFT**

(45) Veröffentlichungstag und Bekanntmachung des Hinweises auf die Patenterteilung:
**08.02.2012 Patentblatt 2012/06**

(51) Int Cl.:
***G06T 5/00*** ^(2006.01)

(21) Anmeldenummer: **09014608.5**

(22) Anmeldetag: **24.11.2009**

(54) **Verfahren und Vorrichtung zur adaptiven Filterung von dreidimensionalen Bilddaten**

Method and device for adaptive filtering of three-dimensional image data

Procédé et dispositif pour filtrage adaptif de données d'images tridimensionelles

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**29.06.2011 Patentblatt 2011/26**

(73) Patentinhaber: **Baumer Innotec AG**
**8500 Frauenfeld (CH)**

(72) Erfinder:
• **Siegel, Sebastian, Dr.**
**01309 Dresden (DE)**
• **Benz, Mirko**
**01328 Dresden (DE)**
• **Ihlefeld, Joachim, Dr.**
**01067 Dresden (DE)**

(74) Vertreter: **Strauss, Steffen**
**Baumer Innotec AG**
**Hummelstrasse 17**
**8500 Frauenfeld (CH)**

(56) Entgegenhaltungen:
**WO-A1-2009/097516**

• **SERBAN OPRISESCU ET AL: "Measurements with ToF Cameras and Their Necessary Corrections" SIGNALS, CIRCUITS AND SYSTEMS, 2007. ISSCS 2007. INTERNATIONAL SYMPOSIUM ON, IEEE, PI, 1. Juli 2007 (2007-07-01), Seiten 1-4, XP031128576 ISBN: 978-1-4244-0968-6**
• **DRAGOS FALIE ET AL: "Noise Characteristics of 3D Time-of-Flight Cameras" SIGNALS, CIRCUITS AND SYSTEMS, 2007. ISSCS 2007. INTERNATIONAL SYMPOSI UM ON, IEEE, PI, 1. Juli 2007 (2007-07-01), Seiten 1-4, XP031128578 ISBN: 978-1-4244-0968-6**

**Beschreibung**

Für die schnelle Analyse von dreidimensionalen Objektdaten, im Folgenden vereinfacht 3D - Daten genannt, wird für viele Applikationen eine effiziente Vorverarbeitung der Signale des bildgebenden Systems benötigt. Für industrielle Applikationen sind hierbei allgemeingültige Verfahren von besonderem Interesse, die in Echtzeit, d.h. typischerweise mit Verarbeitungsgeschwindigkeiten oberhalb einiger Megapixel pro Sekunde ablaufen und die neben der 3D-Information auch ein Farb- bzw. Grauwertbild liefern. Die 3D- Information wird in der Regel durch die Auswertung einer, meist jedoch mehrerer skalarer Funktionen von jeweils zwei Koordinaten gewonnen. Die Funktionen werden aus relativ kleinen Signaldifferenzen berechnet. Die Signale werden insbesondere auf schwach remittierenden oder weit entfernten Objektbereichen kritisch. Aus diesem Grunde wird eine hohe Signaldynamik gefordert, die jedoch an technische Grenzen stößt. Die skalaren Funktionen werden dann durch eine in der Regel nicht lineare Funktion so umgerechnet, dass ein 3D- Bild entsteht.

Dabei kann das Problem entstehen, dass das erreichte Signal-/Rauschverhältnis nicht den Anforderungen genügt. Wegen des hohen Aufwands allgemeingültiger Verfahren existieren einer Reihe von vereinfachten Filterverfahren zur Signalverbesserung. Diese Filterverfahren sollen einerseits unnötiges Rauschen vermindern, andererseits wegen der zumeist ebenfalls kritisch niedrigen Ortauflösung feine kontrastreiche Bilddetails nicht verfälschen.

Ein zweidimensionaler nichtlinearer Filter ist beispielsweise aus der US 5,150,202 A bekannt. Es werden Raumfrequenzfilter in Echtzeit als Funktion von Farbwerten umgeschaltet.

In der DE 102 38 322 A1 wird für die Verarbeitung von 3D-Daten eines Computertomographen ein Verfahren vorgeschlagen, in dem ein Detektor für die Bildschärfe einen Filtersatz für die Anpassung eines Raumfrequenzfilters umschaltet und damit eine adaptive Filterung erreicht.

In der WO 2009/097516 wird vorgeschlagen, ein adaptives Nachbarschaftsfilter (ANF) zur Filterung von 3D - Daten einzusetzen. Das ANF reduziert im Distanzbild das Rauschen durch Mittelung. Es wird eine Wahrscheinlichkeit, dass Pixel in derselben Ebene liegen, berechnet. Dabei wird eine hohe Wahrscheinlichkeit für zwei Pixel angenommen, wenn die Distanz oder der Grauwert nahe beieinander liegen. Diese Wahrscheinlichkeit steuert eine Gewichtsfunktion für die Mittelung.

In der Nachbarschaft eines Zentralpunkts werden dazu die Grauwerte des Zentralpunkts zu den Nachbarn verglichen, wenn die Wahrscheinlichkeit einen Schwellwert übersteigt. Dann wird ein gewichteter Mittelwert der Distanzen der entsprechenden Pixel gebildet. Es werden verschiedene Gewichtsfunktionen angegeben.

Das beschriebene Verfahren verbessert den Bildeindruck, das Verfahren weist jedoch eine Reihe von Artefakten auf. Die Rauschunterdrückung erreicht ferner nicht die signaltheoretisch mögliche Performance.

Die Artefakte entstehen durch die Beschränkung des ANF auf die Mittelung der Distanz auf einem ortsfesten XY- Raster. Bei Verwendung einer adaptiven Mittelungsfunktion muss damit gerechnet werden, dass die Gewichte nicht symmetrisch zum Zentralpunkt ausgeprägt sind. Dies ist nur für symmetrisch aufgebaute Convolver, wie sie gewöhnlich in nicht adaptiven Filtern eingesetzt werden, der Fall. Die Unsymmetrie hat zur Folge, dass der für die Distanz z gefundene Mittelwert einem anderen Ort als dem Zentralpunkt zugeordnet werden muss. Der entstehende Interpolationsfehler stört insbesondere bei geringer 3D-Auflösung.

Der Erfindung liegt daher die Aufgabe zugrunde, die Rauschunterdrückung bei der Auswertung von 3D-Daten zu verbessern. Diese Aufgabe wird durch den Gegenstand der unabhängigen Ansprüche gelöst. Vorteilhafte Ausgestaltungen und Weiterbildungen der Erfindung sind in den jeweiligen abhängigen Ansprüchen angegeben.

Für eine sichere Erkennung in industriellen Prozessen ist ein definiertes Signal/Rauschverhältnis im Bild notwendig. Im 3D- Bild versteht man unter Rauschen den mittleren quadratischen Längenmessfehler zwischen der Hauptebene des Objektivs und dem betrachteten Objektpunkt.

Das Signal/Rauschverhältnis einer 3D- Messung auf einem Objektpunkt ist in guter Näherung eine Funktion der Wurzel aus der Signalladung und damit des Grauwerts. Dunkle oder weit entfernte Bildbereiche rauschen stärker. Der Anwender erwartet demgegenüber aber im 3D-Bild einen im Wesentlichen von der Aussteuerung unabhängigen Signal/Rauschabstand für jeden Messpunkt. Diese Anforderung kann erfindungsgemäß erfüllt werden, wenn die Detailauflösung in Abhängigkeit des Grauwerts adaptiv gesteuert wird.

Dazu wird für jeden Grauwert eine Vorschrift vorgegeben, die die Signalform, im Konkreten eine innerhalb einer Umgebung des Bildpunkts ausgeprägte Fläche, optimal filtert.

Für ein konstantes Signal/Rauschverhältnis im 3D-Bild kann für diesen Zweck eine vom Grauwert des betrachteten Zentralpunkts abhängige Anzahl von Akkumulationen durchgeführt werden.

Dies bedeutet für eine optimale Detailwahrnehmbarkeit bei optimalem Signal/Rauschverhältnis, dass die Filtercharakteristik und damit die Größe der Nachbarschaft in Weiterbildung der Erfindung als Funktion der Aussteuerung des Zentralpunkts gewählt wird.

Ein optimales Signal/Rauschverhältnis kann mit einer modellbasierten Filterung erreicht werden. Im vorliegenden Fall genügt meist das Modell einer Ebene. Das Objekt wird durch eine Anzahl von Ebenen mit unterschiedlichen Parametern interpoliert. Für jeden Bildpunkt der Oberfläche wird die Ebene ausgewählt, bei der die Summe der Abstandsquadrate der relevanten 3D-Punkte minimal wird. Die Schnitte benachbarter Ebenen ergeben Polygone, mit denen die dreidimensionale Oberfläche eines Körpers beschrieben werden kann.

Bei bekannten Verfahren wird das 3D-Signal gefiltert. Dies ist jedoch nicht optimal, da bedingt durch die nichtlineare Verarbeitung Artefakte, insbesondere aufgrund der Division kleiner Signale entstehen können.

Erfindungsgemäß werden daher die typischerweise skalaren Ausgangsfunktionen des Sensors demgegenüber direkt im linearen Signalraum der Ausgangssignale gefiltert und anschließend - im Allgemeinen nichtlinear - weiter verarbeitet. Insbesondere werden hierdurch rauschbedingte Artefakte durch Bereichsüberschreitungen bei Phasenverfahren weitgehend vermieden.

Durch die Nachbarschaftsbeziehungen ist es ferner möglich, größere Bereiche als sie durch Phasenbegrenzungen vorgegeben sind, darzustellen, indem die Nachbarschaften registriert und segmentiert werden.

Gemäß der Erfindung ist im Speziellen eine Vorrichtung zur Ermittlung dreidimensionaler Objektkoordinaten mittels zumindest eines Sensors vorgesehen, welche

- zumindest eine Kamera mit einem Matrixsensor,
- und eine Daten- und Signalverarbeitungseinrichtung, welche die von der Kamera aufgenommenen Bilddaten verarbeitet, umfasst
- wobei die Kamera mehrere ortsabhängige Ausgangssignale liefert, wobei die Kamera dazu eingerichtet ist, jeweils für einen Bildbereich eines auf dem Sensor abgebildeten Objektbereichs ein erstes Ausgangssignal auszugeben, welches eine Funktion des Grauwerts ist, sowie zumindest ein zweites Ausgangssignal auszugeben, welches eine Funktion des Abstandes der Kamera zum im Bildbereich abgebildeten Objektbereich ist, und wobei

- die Daten- und Signalverarbeitungseinrichtung dazu eingerichtet ist, die zweiten Ausgangssignale, welche eine Funktion des Abstands zum Objektbereich sind, zu filtern, und
- Abstandswerte aus den zweiten Ausgangssignalen zu errechnen, wobei
- in der Daten- und Signalverarbeitungseinrichtung die Filterung der zweiten Ausgangssignale vor der Berechnung der Abstandswerte erfolgt, und wobei
- die Daten- und Signalverarbeitungseinrichtung zumindest einen Convolver zur Filterung der zweiten Ausgangssignale enthält, wobei mit dem Convolver ein zweites Ausgangssignal eines Bildbereichs mit weiteren zweiten Ausgangssignalen benachbarter Bildbereiche verrechnet wird, und
- wobei die Daten- und Signalverarbeitungseinrichtung dazu eingerichtet ist, eine Filterung mit dem Convolver vorzunehmen, wenn der durch das erste Ausgangssignal eines Bildbereichs repräsentierte Grauwert einen Grenzwert unterschreitet, und
- wobei die Daten- und Signalverarbeitungseinrichtung dazu eingerichtet ist, dreidimensionale Objektkoordinaten mit den unter Verwendung des Convolvers gefilterten zweiten Ausgangssignalen zu errechnen.

Das entsprechende, insbesondere mit einer solchen Vorrichtung durchführbare Verfahren zur Ermittlung dreidimensionaler Objektkoordinaten basiert auf der Verwendung

- zumindest einer Kamera mit einem Matrixsensor,
- und einer Daten- und Signalverarbeitungseinrichtung, welche die von der Kamera aufgenommenen und bereitgestellten Bilddaten in Form ortsabhängiger Ausgangssignale verarbeitet,

wobei die Kamera jeweils für einen Bildbereich eines auf dem Sensor abgebildeten Objektbereichs ein erstes Ausgangssignal ausgibt, welches eine Funktion des Grauwerts ist, sowie zumindest ein zweites Ausgangssignal ausgibt, welches eine Funktion des Abstandes der Kamera zum Objektbereich ist, und wobei

- die Daten- und Signalverarbeitungseinrichtung die zweiten Ausgangssignale, welche eine Funktion des Abstands zum Objektbereich sind, filtert, und
- Abstandswerte aus den zweiten Ausgangssignalen errechnet, wobei
- in der Daten- und Signalverarbeitungseinrichtung die Filterung der zweiten Ausgangssignale vor der Berechnung der Abstandswerte durchgeführt wird, und wobei
- die Daten- und Signalverarbeitungseinrichtung zumindest einen Convolver zur Filterung der zweiten Ausgangssignale enthält, und mit dem Convolver ein zweites Ausgangssignal eines Bildbereichs mit weiteren zweiten Ausgangssignalen benachbarter Bildbereiche verrechnet, und
- wobei die Daten- und Signalverarbeitungseinrichtung eine Filterung mit dem Convolver dann vornimmt, wenn der durch das erste Ausgangssignal eines Bildbereichs repräsentierte Grauwert einen Grenzwert unterschreitet, und
- wobei die Daten- und Signalverarbeitungseinrichtung dann dreidimensionale Objektkoordinaten mit den unter Verwendung des Convolvers gefilterten zweiten Ausgangssignalen errechnet.

Gemäß einer bevorzugten Weiterbildung der Erfindung gibt die Kamera jeweils für einen Bildbereich eines auf dem Sensor abgebildeten Objektbereichs zwei zweite Ausgangssignale aus. Beispielsweise kann die Phaseninformation bei einem Flugzeit-Sensor anhand der beiden zweiten Ausgangssignale gewonnen werden. Bei Triangulationssensoren können zwei Verschiebungsvektoren als zweite Ausgangssignale ausgegeben werden.

Der Bildbereich eines jeweils für einen auf dem Sensor abgebildeten Objektbereichs kann im einfachsten Fall der auf einen Pixel des Matrixsensors abgebildete Bereich sein. Dies muss jedoch nicht immer der Fall sein. So kann unter anderem gegebenenfalls auch ein Binning der Pixel vorgegeben werden. In einem weiteren Fall können bestimmte Bildbereiche auch anhand der Bildsignale ausgewählt werden. Dies ist beispielsweise dann sinnvoll, wenn nicht alle aufgenommenen Bildbereiche eine Tiefeninformation beinhalten. Als Beispiel sei hier ein Triangulationssensor genannt, bei welchem die Tiefen-, beziehungsweise Abstandsinformation durch die Positionsverschiebung von Strukturelementen einer strukturierten Beleuchtung, wie etwa einem auf das Objekt projizierten Raster gewonnen wird. Hier tragen im Allgemeinen nur die beleuchteten Objektbereiche eine von der Vorrichtung auswertbare Tiefeninformation.

Die Filterung mit dem Convolver, sowie gegebenenfalls weitere Signal- oder Datenverarbeitungsoperationen können besonders vorteilhaft in einem FPGA ("Field Programmable Gate Array") implementiert werden. Dies erlaubt sehr hohe Rechenleistungen und damit auch eine Echtzeit-Verarbeitung der Daten. Die Implementierung in einem FPGA ist insbesondere auch deshalb günstig, weil sich bei der erfindungsgemäßen Filterung ein linearer Algorithmus verwendet wird, der in einem FPGA unkompliziert als Pipelineprozess umgesetzt werden kann.

In besonders bevorzugter Weiterbildung der Erfindung hält die Signal- und Datenverarbeitungseinrichtung mehrere Convolver, wobei die Convolver eine Faltung mit unterschiedlich großen Umgebungen des Bildbereichs bewirken, und wobei die Signal- und Datenverarbeitungsvorrichtung weiterhin dazu eingerichtet ist, aus der Menge der gehaltenen Convolver einen Convolver anhand des Grauwerts des Bildbereichs auszuwählen, wobei die Auswahl derart erfolgt, dass mit fortschreitender Abnahme des Grauwerts eine Faltung des zweiten Ausgangssignals des Bildbereichs mit zweiten Ausgangssignalen aus fortschreitend größeren Nachbarschaften durchgeführt wird. Ist also der Grauwert des Bildbereichs sehr klein, wird ein Convolver ausgewählt, der eine Faltung mit einer größeren Anzahl von zweiten Ausgangssignalen aus der Nachbarschaft des Bildbereichs bewirkt.

Die Erfindung wird nachfolgend anhand der beigefügten Zeichnungen näher erläutert. Dabei verweisen gleiche Bezugszeichen auf gleiche oder entsprechende Elemente.

Es zeigen:

Fig. 1       den Signal-Rauschabstand von Ausgangssignalen des Sensors als Funktion des Grauwerts gv,

Fig. 2A      ein von der Kamera aufgenommenes Bild eines Objekts,

Fig. 2B      eine Erlaubnismaske,

Fig. 2C      die aus der Verrechnung eines Convolvers mit der in Fig. 2B gezeigten Erlaubnismaske resultierende Filtermatrix,

Fig. 3A      eine dreidimensionale Darstellung eines zweiten Ausgangssignals des Sensors als Punktmenge in relativen Ortskoordinaten,

Fig. 3B      die in Fig. 3A gezeigte Darstellung mit einer aproximierenden Ebene,

Fig. 4       einen Graph zweiter Ausgangssignale als Funktion des Orts, deren zugehörige Ortskoordinaten auf einer Geraden liegen,

Fig. 5       und Fig. 6 Teile einer Vorrichtung zur Ermittlung dreidimensionaler Objektkoordinaten,

Fig. 7       eine Ausgestaltung der Erfindung in Form eines Triangulations-Sensorsystems und

Fig. 8       eine Ausführungsform der Erfindung mit einer als Flugzeit-Sensor ausgebildeten Kamera.

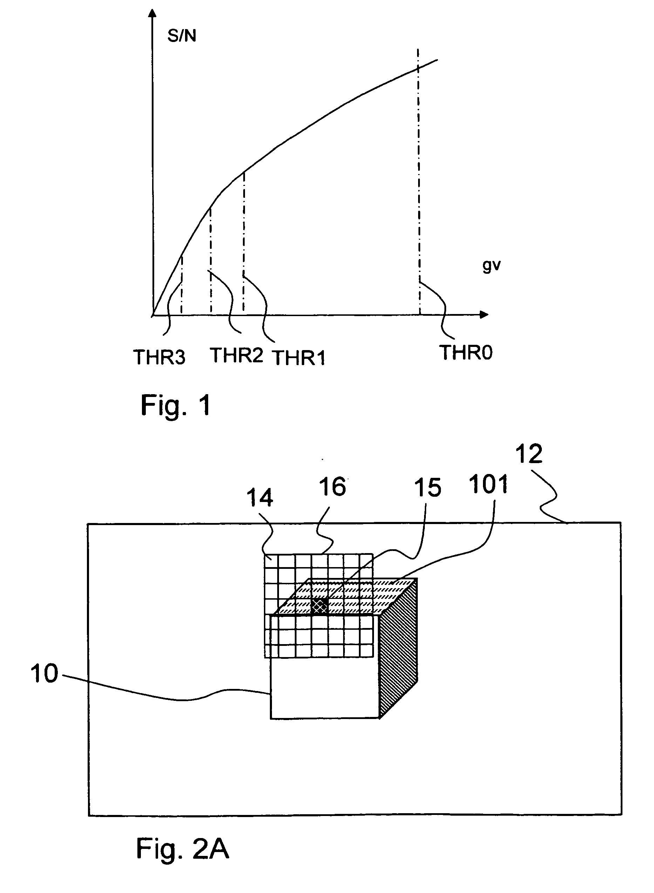

Das Signal/Rauschverhältnis S/N im 3D- Bild hängt direkt mit der Anzahl der Signalelektronen $\sqrt{n}$ und damit der Aussteuerung des Grauwertbildes $\sqrt{gv}$ zusammen und wächst monoton mit der Aussteuerung, wie anhand des in Fig.1 gezeigten Graphen zu erkennen ist.

Aus der menschlichen Anschauung ist bekannt, dass bei guter Ausleuchtung und gutem Kontrast feine Bilddetails besser erkannt werden, als bei ungenügender Beleuchtungsstärke und fehlendem Kontrast. Auch für technische Systeme ist die Detailerkennbarkeit eine Funktion des lokalen Kontrasts, d.h. sie ist sowohl von den Objekteigenschaften als auch von der Beleuchtungsstärke abhängig.

Deshalb ist es für die Optimalfilterung von 3D-Bildern sinnvoll, die Ortsauflösung als Funktion des lokalen Kontrasts auszuführen und Bereiche mit geringer Aussteuerung stärker Tiefpass zu filtern als hoch ausgesteuerte.

Der 3D- Sensor im Ausführungsbeispiel liefert für jeden Objektbereich als zweite Ausgangssignale jeweils zwei skalare Funktionen $F_1(x,y)$ und $F_2(x,y)$, die in Abstands- oder Tiefenwerte eines 3D-Bildes umgerechnet werden sollen. Die Erfassung von Abstandswerten mittels zweier Ausgangssignale ist für viele Typen von 3D-Sensoren typisch. Im Falle eines Triangulationssensors gemäß einer ersten Weiterbildung der Erfindung, bei welchem eine strukturierte Beleuchtung verwendet wird, die unter einem Winkel zur optischen Achse der Kamera projiziert wird) werden die Verschiebungsvektoren [dx,dy] der Strukturelemente der Beleuchtung auf dem Objekt gemessen und als skalares Funktionspaar interpretiert.

Gemäß dieser Weiterbildung der Erfindung ist somit eine Kamera mit Triangulationssensor, sowie eine Einrichtung zur strukturierten Beleuchtung eines Objekts vorgesehen, wobei mit der Einrichtung zur strukturierten Beleuchtung ein Beleuchtungsmuster unter einem Winkel zur optischen Achse der Kamera projiziert wird. Es ist eine Recheneinrichtung vorgesehen, welche Verschiebungsvektoren [dx,dy] der Strukturelemente des Beleuchtungsmusters auf dem Objekt bestimmt und als skalares Funktionspaar interpretiert, beziehungsweise die Verschiebungswerte bestimmt und die Funktionswerte des skalaren Funktionspaars als zweite Ausgangssignale bereitstellt.

Im Falle eines Phasensensors nach dem Time of Flight - Prinzip mit periodisch modulierter Lichtquelle wird das Signal mit zwei zueinander phasenverschobenen arbeitenden Integratoren akkumuliert. In diesem Fall können die zweiten Ausgangssignale die Differenzsignale der Phasenakkumulatoren sein. Wird ein Sensor verwendet, der nach dem Impulsverfahren und Time of Flight - Prinzip arbeitet, bei welchem Lichtpulse vom Sensor phasenstarr, jedoch mit zwei unterschiedlichen Integrationszeiten akkumuliert werden, können die zweiten Ausgangssignale zwei im Zeitbereich unterschiedlich abgetastete Signale darstellen.

Die zwei skalaren Funktionen $F_1(x,y)$ und $F_2(x,y)$ rauschen. Im Folgenden wird ausgeführt, wie dieses Rauschen jeweils reduziert werden kann, um schließlich ein rauschärmeres 3D-Bild zu erhalten. Das Signal/Rauschverhältnis im Grauwertkanal ist in Fig.1 dargestellt. Im Ausführungsbeispiel wird die Kennlinie in 4 Bereiche durch die Schwellen THR0, THR1, THR2, THR3 beispielhaft geteilt. Für einen Grauwert größer THR0 wird keine Korrektur durchgeführt, weil das Signal/Rauschverhältnis ausreicht und Details möglichst erhalten bleiben sollen.

Die anderen Schwellen wurden bei dem in Fig. 1 gezeigten Beispiel willkürlich logarithmisch abgestuft. Gegenüber der Schwelle THR0 reduziert sich das S/N für die anderen Schwellen entsprechend der Beziehung $\sqrt{gv}$ .

Jedem der Schwellen THR0, THR1, THR2, THR3 wird in Weiterbildung der Erfindung ein bestimmter Convolver zugeordnet, mit welchem die Filterung der zweiten Ausgangssignale durch Faltung mit benachbarten zweiten Signalen vorgenommen wird. Es wird also von der Signal- und Datenverarbeitungseinrichtung aus der Menge der gespeicherten Convolver ein Convolver anhand des Grauwerts des Bildbereichs ausgewählt. Die Auswahl erfolgt dabei derart, dass mit fortschreitender Abnahme des Grauwerts eine Faltung des zweiten Ausgangssignals des Bildbereichs mit zweiten Ausgangssignalen aus fortschreitend größeren Nachbarschaften durchgeführt wird.

Ein Beispiel einer Abstufung der Convolver ist in der nachfolgenden Tabelle aufgelistet:

Tabelle 1:

| Schwellwert | | S/N | Faktor |
|---|---|---|---|
| | | | |
| THR0 | 100% | 1,000 | 1 |
| THR1 | 50% | 0,707 | 2 |
| THR2 | 25% | 0,500 | 4 |
| THR3 | 12,50% | 0,354 | 8 |

Die Schwellwerte THR1, THR2 und THR3 liegen hier demnach jeweils bei der Hälfte des Grauwerts des nächst höheren Schwellwerts.

Das Signal-Rauschverhältnis S/N, beziehungsweise $\sigma_{conv}$ eines mit einem Convolver gemittelten Signals errechnet sich zu

$$(1) \quad \sigma_{conv} = \sigma \sqrt{\sum_{i=1}^{nc} \left( \frac{\alpha_i}{\alpha_S} \right)^2}$$

Dabei bezeichnen

nc: die Anzahl der Convolverelemente,

$\alpha_i$: die Convolverelemente

$\alpha_S$: die Summe der Convolverelemente, und

$\sigma$: die Varianz.

Für ein Beispiel eines 3x3 Convolvers (Boxfilter), bei welchem für alle Convolverelemente $\alpha_i = 1$ gilt, ergibt sich mit $\alpha_S = 9$, nc=9 damit eine Reduzierung des Rauschens auf 1/3.

Man kann nun einen Satz optimierter Filter für eine Verbesserung des Signal-Rauschverhältnisses um die Faktoren 1, 2, 4 und 8, entsprechend der obigen Tabelle 1 angeben.

Dazu ist in Weiterbildung der Erfindung ein 7x7 Convolverkern, beziehungsweise ein Satz von Convolvern vorgesehen, bei welchem die einzelnen Convolver beispielsweise gegeben sind durch:

a)

$$\begin{bmatrix} 0 & 0 & 0 & 0 & 0 & 0 & 0 \\ 0 & 0 & 0 & 0 & 0 & 0 & 0 \\ 0 & 0 & 0 & 0 & 0 & 0 & 0 \\ 0 & 0 & 0 & 1 & 0 & 0 & 0 \\ 0 & 0 & 0 & 0 & 0 & 0 & 0 \\ 0 & 0 & 0 & 0 & 0 & 0 & 0 \\ 0 & 0 & 0 & 0 & 0 & 0 & 0 \end{bmatrix},$$

b)

$$\begin{bmatrix} 0 & 0 & 0 & 0 & 0 & 0 & 0 \\ 0 & 0 & 0 & 0 & 0 & 0 & 0 \\ 0 & 0 & 1 & 2 & 1 & 0 & 0 \\ 0 & 0 & 2 & 4 & 2 & 0 & 0 \\ 0 & 0 & 1 & 2 & 1 & 0 & 0 \\ 0 & 0 & 0 & 0 & 0 & 0 & 0 \\ 0 & 0 & 0 & 0 & 0 & 0 & 0 \end{bmatrix}$$

c)

$$\begin{bmatrix} 0 & 0 & 0 & 0 & 0 & 0 & 0 \\ 0 & 1 & 1 & 1 & 1 & 1 & 0 \\ 0 & 1 & 1 & 1 & 1 & 1 & 0 \\ 0 & 1 & 1 & 1 & 1 & 1 & 0 \\ 0 & 1 & 1 & 1 & 1 & 1 & 0 \\ 0 & 1 & 1 & 1 & 1 & 1 & 0 \\ 0 & 0 & 0 & 0 & 0 & 0 & 0 \end{bmatrix} ,$$

und

d)

$$\begin{bmatrix} 1 & 1 & 1 & 1 & 1 & 1 & 1 \\ 1 & 1 & 1 & 1 & 1 & 1 & 1 \\ 1 & 1 & 1 & 1 & 1 & 1 & 1 \\ 1 & 1 & 1 & 1 & 1 & 1 & 1 \\ 1 & 1 & 1 & 1 & 1 & 1 & 1 \\ 1 & 1 & 1 & 1 & 1 & 1 & 1 \\ 1 & 1 & 1 & 1 & 1 & 1 & 1 \end{bmatrix} .$$

Das Signal/Rauschverhältnis verbessert sich nach Anwendung der Convolver um die Faktoren 1 für Convolver a), 16/6 für Convolver b), 5 für Convolver c) und 7 für Convolver d). Die Ortsauflösung reduziert sich entsprechend.

Für ein optimales Filterergebnis in einer homogenen Umgebung ist es demzufolge vorgesehen, den geeigneten Filterkern LOWPASS als Funktion des Grauwerts des Zentralpunkts auszuwählen und anschließend die Faltungsoperation durchzuführen. Hierzu wird die Grauwertkennlinie nach Fig.1 in vier Intervalle aufgeteilt.

In einer nicht homogenen Umgebung, in der beispielsweise ein rauscharm abgebildetes Objekt im Vordergrund an ein rauschendes dunkles Objekt im Hintergrund angrenzt, ist jedoch die Mittelwertbildung innerhalb eines großen Convolverkerns unerwünscht, weil dadurch Informationen verloren gehen. Aus diesem Grund wird die Faltungsoperation nur über den Elementen der Umgebung mit hoher Zusammenhangswahrscheinlichkeit zwischen dem Zentralpunkt oder allgemeiner jeweils zentralen ausgewählten Bildbereich und dem jeweiligen Element der Umgebung ausgeführt. Als hinreichende, aber nicht notwendige Bedingung, dass zwei Bildpunkte zu einem Flächensegment gehören, wird in Weiterbildung der Erfindung von der Signal- und Datenverarbeitungsvorrichtung geprüft, ob die Grauwerte des Zentralpunkts und des jeweiligen Punkts aus der Nachbarschaft annähernd gleich sind, beziehungsweise innerhalb eines vorgegebenen Intervalls liegen. Ist dies der Fall, wird die Faltungsoperation erlaubt und durchgeführt.

Wenn die vollständige, im Beispiel 7x7 Nachbarschaft analysiert wird, kann für jeden Zentralpunkt eine Erlaubnismaske $EN_{i,j}$ in Form einer 7x7 Matrix angegeben werden.

Die Elemente der Matrix können über eine einfache Schwellwertentscheidung über den Grauwerten des Zentralpunkts und des Punktes i,j der Nachbarschaft gemäß nachfolgender Bedingung gebildet werden:

$$(2) \quad \begin{aligned} EN_{i,j} &= 1 \quad if -THR5 < gv_{i,j} - gv_{0,0} < THR5 \quad ;0 \; otherwise \\ THR5 &= const \; gv_{0,0} \end{aligned}$$

die Schwelle THR5 wird aus dem Grauwert $gv_{0,0}$ des Zentralpunkts gebildet, als Konstante kann beispielsweise ein Wert von 1/8 gewählt werden.

Für die Ausführung der nichtlinearen Filterfunktion kann nun ein resultierender, meist unsymmetrischer Faltungskern $CONV_{i,j}$ angegeben werden, der durch Multiplikation der Elemente des Tiefpassfilters und der jeweiligen entsprechenden Elemente Erlaubnismaske entsteht:

$$(3) \quad CONV_{i,j} = LOWPASS_{i,j}\left(gv_{0,0}\right) EN_{i,j}$$

In Weiterbildung der Erfindung wird also aus dem für die Filterung vorgesehenen Convolver eine Filtermatrix durch Überlagerung des Convolvers mit einer Erlaubnismaske gebildet, indem die Elemente des Convolvers einzeln mit den Elementen der Filtermatrix verrechnet oder multipliziert werden. Die Filtermatrix enthält dabei logische Einträge, welche angeben, welche der zu einem zu filternden zentralen Bildbereich benachbarten Bildbereiche mit dem zentralen Bildbereich zusammenhängen. Beispielsweise kann die Erlaubnismaske die Einträge "1" für zusammenhängende Bildbereiche und "0" für nicht mit dem zentralen Bildbereich zusammenhängende Bildbereiche enthalten. Bei der elementweisen Multiplikation entsteht so eine Filtermatrix, welche die Elemente des Convolvers als Einträge dort enthält, wo die entsprechenden Einträge der Erlaubnismaske "1" sind. Ansonsten wird die Filtermatrix mit Nullen gefüllt. Die Signal- und Datenverarbeitungseinrichtung ist dazu eingerichtet, anhand eines Vergleichs der Grauwerte der Bildbereiche, nämlich eines zentralen Bildbereichs mit benachbarten Bildbereichen, insbesondere wie oben beschrieben, festzustellen, ob eine hinreichend hohe Zusammenhangswahrscheinlichkeit der Bildbereiche besteht. Ist dies gegeben, wird in der Erlaubnismatrix für den oder die mit dem zentralen Bildbereich benachbarten Bildbereiche ein Erlaubniswert, beispielsweise wie vorstehend beschrieben, eine "1" eingetragen.

Dieses Verfahren wird nachfolgend anhand der Figuren 2A bis 2C beispielhaft beschrieben. Fig. 2A zeigt die Abbildung eines Objekts 10 innerhalb eines von der Kamera aufgenommenen Bildes 12. Das Bild 12 ist aus Bildbereichen 14 zusammengesetzt. Im einfachsten Fall können die Bildbereiche durch die einzelnen Pixel des Matrixsensors gegeben sein. In Fig. 2A sind nicht alle Bildbereiche 14, sondern nur die Bildbereiche einer 7x7-Umgebung eines zentralen Bildbereichs 15 dargestellt. Generell erfolgt die erfindungsgemäße Filterung selbstverständlich nicht nur für einen einzigen zentralen Bildbereich. Vielmehr werden alle, oder zumindest eine Menge von relevanten Bildbereichen entsprechend als zentrale Bildbereiche einer Umgebung betrachtet und die diesen Bildbereichen zugeordneten zweiten Ausgangssignale gefiltert.

Es wird durch die Signal- und Datenverarbeitungseinrichtung der Grauwert des zentralen Bildbereichs 15 bestimmt. Dieser wird mit den Grauwerten der anderen Bildbereiche 14 der Umgebung 16 verglichen. Sind diese Grauwerte hinreichend ähnlich, wird angenommen, dass die umgebenden Bildbereiche dergestalt mit dem zentralen Bildbereich zusammenhängen, dass diese Bildbereiche in der gleichen Ebene liegen.

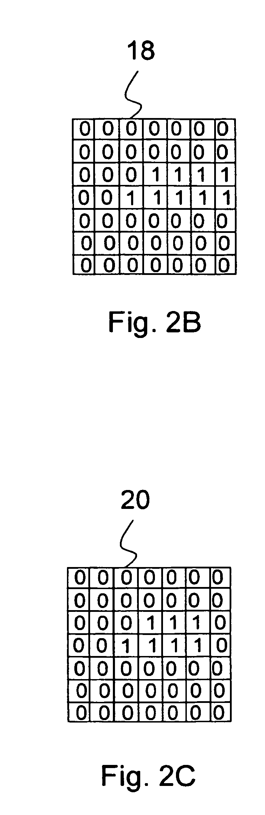

Im vorliegenden Fall ist eine Fläche 101 des Objekts 10 im zentralen Bildbereich abgebildet. Die Grauwerte der weiteren Bildbereiche, auf welchen Objektbereiche abgebildet werden, die vollständig in der Fläche 101 liegen, weisen sehr ähnliche Grauwerte auf. Die Signal- und Datenverarbeitungseinrichtung kann hierzu einfach berechnen, dass der Betrag der Abweichung der Grauwerte kleiner als ein vorgegebener Grenzwert ist. Für diese umgebenden Bildbereiche wird in der Erlaubnismaske ein Erlaubniswert eingetragen. Die resultierende Erlaubnismaske 18 zeigt Fig. 2B. Als Erlaubniswerte wurden beispielhaft logische Einsen eingetragen. Die übrigen Felder werden beispielsweise mit logischen Nullen gefüllt.

Weiterhin wird anhand des Grauwerts des zentralen Bildbereichs 15 bestimmt, welcher der gespeicherten Convolver für die Filterung verwendet werden soll. Die Auswahl kann wie anhand von Fig. 1 erläutert anhand von Schwellwerten erfolgen. Als Beispiel wird angenommen, dass der oben erwähnte Convolver:

$$\begin{bmatrix} 0 & 0 & 0 & 0 & 0 & 0 & 0 \\ 0 & 1 & 1 & 1 & 1 & 1 & 0 \\ 0 & 1 & 1 & 1 & 1 & 1 & 0 \\ 0 & 1 & 1 & 1 & 1 & 1 & 0 \\ 0 & 1 & 1 & 1 & 1 & 1 & 0 \\ 0 & 1 & 1 & 1 & 1 & 1 & 0 \\ 0 & 0 & 0 & 0 & 0 & 0 & 0 \end{bmatrix}$$

ausgewählt wurde.

Nun erfolgt die Verrechnung, beispielsweise eine Multiplikation der Elemente des Convolvers mit den in ihrer Position entsprechenden Einträgen der Erlaubnismaske. Die daraus resultierende Filtermatrix 20 ist in Fig. 2C dargestellt. Mit dieser Filtermatrix werden nun von der Signal- und Datenverarbeitungsvorrichtung die zweiten Ausgangssignale zu den Bildbereichen 14 innerhalb der Umgebung 16 gefaltet und damit ein gemittelter Wert aus den zweiten Ausgangssignalen errechnet. Auch diese Filtermatrix stellt wieder einen Convolver dar, wobei dieser entsprechend der Erlaubnismaske aus dem gespeicherten Convolver abgeleitet wurde.

Die erfindungsgemäße Filterung mit einer Filtermatrix führt zwar zu einer Reduktion des Rauschens, allerdings geht mit der Anpassung des Funktionswerts des oder der zweiten Ausgangssignale im Allgemeinen eine Verschiebung des Schwerpunkts der mit der Filtermatrix gefilterten Bildbereiche in der Bildebene einher. In Weiterbildung der Erfindung wird nun ein Ausgleich dieser Verschiebung vorgeschlagen, um eine größtmögliche Genauigkeit bei der Erstellung der 3D-Bilder zu erzielen.

Das Verfahren zur Filterung der Ausgangssignale, mit einem ein- oder zweidimensionalen Signal, dass die Höheninformation (d.h. das oder die zweiten Ausgangssignale) und einem Signal (d.h. das erste Ausgangssignal), das die Grauwertinformation repräsentiert, basiert darauf, dass wie oben beschrieben der Grauwert des Zentralpunkts einer Nachbarschaft mit einer oder mehreren Schwellen verglichen und eine Filtermatrix, beziehungsweise ein Convolver aus einer Anzahl vordefinierter Convolver ausgewählt wird,
die Zusammenhangswahrscheinlichkeit von Pixeln der Nachbarschaft mit dem Zentralpunkt berechnet und nichtlinear verarbeitet wird (vorzugsweise wie oben beschrieben anhand der Ähnlichkeit der Grauwerte), und dass wie oben beschrieben eine Filtermatrix aus den gleich indizierten Elementen beider Matrizen durch Multiplikation mit einer Erlaubnismatrix gebildet wird, wobei außerdem innerhalb der Nachbarschaft, beziehungsweise für den zentralen Bildbereich und die zum zentralen Bildbereich benachbarten Bildbereiche gewichtete Momente zweiter Ordnung berechnet werden, wobei aus den Momenten zweiter Ordnung ein oder mehrere gefilterte Signale mit der Höheninformation berechnet werden. Anschließend können die Komponenten dann in das gewünschte 3D Format umgewandelt werden.

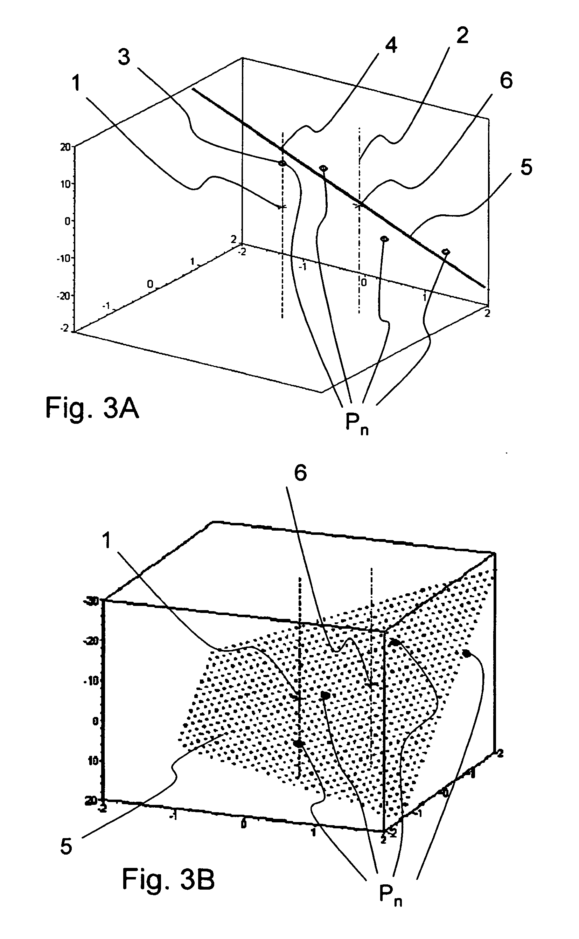

Fig.3A zeigt in einem Beispiel eine diskrete Funktion F(x,y) in relativen Ortskoordinaten, der Funktionswert wird in z-Richtung dargestellt, es handelt sich damit jedoch nicht notwendig um 3D- Daten. Im Beispiel beschreibt die z-Richtung nicht den für 3D-Bilder typischen Entfernungswert sondern einen der vorgenannten Funktionswerte $F_1$ oder $F_2$, die zur Berechnung des Entfernungswertes dienen, also eines der zweiten Ausgangssignale. Die sich aus der diskreten Funktion z = F(x,y) ergebenden Tripel (x,y,z) bilden eine Punktmenge P und werden im Folgenden in einem (z.B. kartesischen) dreidimensionalen Koordinatensystem betrachtet.

F(x,y) weist Rauschen auf. Der in z-Richtung dargestellte Funktionswert soll nun mithilfe seiner Umgebung so angepasst werden, dass sich sein Rauschen verringert. In der Umgebung des Ursprungs 1 der gezeigten Umgebung genügt die Zusammenhangswahrscheinlichkeit von vier mit $P_n$ bezeichneten Punkten aus der Punktmenge P der oben genannten Bedingung (2). Diese vier Punkte sind als kleine Kugeln eingezeichnet, die übrigen Punkte der Punktmenge P wurden weggelassen. Der ursprüngliche Funktionswert des Zentralpunkts 3 soll nun durch den gefilterten Wert 4 ersetzt werden.

Die Faltung mit dem Convolver CONV, beziehungsweise der Filtermatrix liefert zunächst einen Funktionswert 6. Dieser ist der Schwerpunkt der Punkte $P_n$, und liegt auf der Geraden 2. Wie anhand der Fig. 3A zu erkennen ist, ist der Schwerpunkt zu den ursprünglichen relativen xy-Koordinaten [0,0] des Zentralpunkts 1 verschoben. Um hier die Entstehung von Artefakten zu vermeiden, ist eine Korrektur, insbesondere mittels einer Interpolation des Funktionswerts von Vorteil.

Diese Interpolation erfolgt durch eine Ebene 5. Die Parameter dieser approximierenden Ebene sollen so gewählt werden, dass eine optimale Rauschreduktion eintritt, d.h. dass die Summe der mittleren quadratischen Abstandsfehler $\sigma^2$ der Punkte $P_n$ zur approximierenden Ebene 5 minimal wird. Es gilt also für die Ebene:

$$(4) \quad \sigma^2 = \sum_{n=1}^{n\,\mathrm{max}} \left( \vec{N}\vec{P}_n - \lambda \right)^2 \quad \longrightarrow \quad \mathrm{min}$$

Hierbei bezeichnen:

$\vec{N}$ : den Normalenvektor (Hesseform) der Ebene,

$\vec{P}_n$ : die erlaubte Punktmenge, und

$\lambda$ : den Abstand der Ebene vom Ursprung.

Die oben genannte Bedingung wird genau dann erfüllt, wenn die partiellen Ableitungen von $\sigma^2$ nach den Komponenten von $\vec{N}$ null werden. Der Abstand $\lambda$ der Ebene vom Ursprung bleibt zunächst variabel. Dies soll zunächst an einem Zahlenbeispiel verdeutlicht werden. Nach Einsetzen der Zahlenwerte der Punkte $P_n$ nach Fig. 3A, 3B in die partiellen Ableitungen von $\sigma^2$ nach den Komponenten nx, ny, nz erhält man ein lineares Gleichungssystem. In einem konkreten Zahlenbeispiel lautet dieses:

$$N := [\, nx,\, ny,\, nz\,]$$

$$6\, nx - 31.68000000\, nz - 6\, \lambda + 6\, ny = 0$$

$$6\, nx + 10\, ny - 60.08800000\, nz - 6\, \lambda = 0$$

$$726.5507520\, nz + 8.216000000\, \lambda - 31.68000000\, nx - 60.08800000\, ny = 0$$

Nach Lösen des Gleichungssystems erhält man

$$\{\, nz = .06562865833\, \lambda,\ nx = .8804245845\, \lambda,\ ny = .4660947314\, \lambda\,\}$$

Die so gefundenen Komponenten können in die Ebenengleichung nach Hesse eingesetzt werden:

$$(5) \quad \vec{N}\vec{P}_{x,y,z} - \lambda = 0$$

Für den Punkt P=[0,0,z] erhält man folgende gefilterte z-Koordinate:

$$z = \frac{\lambda}{nz} \quad (6)$$

Nach dem oben dargestellten Zahlenbeispiel ergibt sich damit z=15,23.

Die Gleichung (4) kann analytisch allgemein gelöst und z bzw. die Funktion F, beziehungsweise das gefilterte zweite Ausgangssignal kann mit Hilfe von Momenten ausgedrückt werden:

$$(7)$$

$$\Delta F_{filtered} = \frac{-\mu_{11XZ}{}^2\,\mu_{2Y} - \mu_{2Z}\,\mu_{11XY}{}^2 + 2\mu_{11XY}\,\mu_{11XZ}\,\mu_{11YZ} + \mu_{2X}\,\mu_{2Y}\,\mu_{2Z} - \mu_{2X}\,\mu_{11YZ}{}^2}{\mu_{11YZ}(\mu_{11XY}\,\mu_{1X} - \mu_{2X}\,\mu_{1Y}) + \mu_{11XZ}(\mu_{11XY}\,\mu_{1Y} - \mu_{2Y}\,\mu_{1X}) + \mu_{1Z}(\mu_{2X}\,\mu_{2Y} - \mu_{11XY}{}^2)}\frac{1}{S_{conv}}$$

In Gleichung (7) gilt für die Momente:

$$(8) \quad \mu_{\alpha,\beta,X,Y} = \sum_{i}\sum_{j}\left(P_{n,X}\right)^{\alpha}\left(P_{n,Y}\right)^{\beta} CONV_{i,j}$$

$$(9) \quad \mu_{\alpha,\beta,X,Z} = \sum_i \sum_j \left(P_{n,X}\right)^\alpha \left(P_{n,Z}\right)^\beta CONV_{i,j}$$

$$(10) \quad \mu_{\alpha,\beta,Y,Z} = \sum_i \sum_j \left(P_{n,Y}\right)^\alpha \left(P_{n,Z}\right)^\beta CONV_{i,j}$$

$$(11) \quad \mu_{\alpha,X} = \sum_i \sum_j \left(P_{n,X}\right)^\alpha CONV_{i,j}$$

$$(12) \quad \mu_{\alpha,Y} = \sum_i \sum_j \left(P_{n,Y}\right)^\alpha CONV_{i,j}$$

$$(13) \quad \mu_{\alpha,Z} = \sum_i \sum_j \left(P_{n,Z}\right)^\alpha CONV_{i,j}$$

$$(14) \quad S_{conv} = \sum_i \sum_j CONV_{i,j}$$

Die Elemente $CONV_{i,j}$ bezeichnen dabei die einzelnen Elemente der Filtermatrix. Der Index "n" bezeichnet jeweils einen Punkt aus der Menge $\vec{P}_n = \{P_1, P_2, ..., P_n\}$, wo $CONV_{i,j} \neq 0$ gilt. Die Indizes X, Y, Z der Punkte $P_n$, also $P_{n,x}$, $P_{n,Y}$, $P_{n,z}$, bezeichnen die X-, Y- und Z- Komponenten dieser Punkte. Die Komponente $P_{n,z}$ repräsentiert dementsprechend den jeweiligen Funktionswert an der Stelle X,Y, beziehungsweise den zur Position X,Y gehörenden Wert des zweiten Ausgangssignals. Wie weiterhin anhand der vorstehenden Gleichungen (9) bis (13) ersichtlich ist, bezeichnen die Indizes $\alpha, \beta$ der Momente Exponenten, mit welchen die jeweiligen X, Y, oder Z-Komponenten der Punkte $P_n$ potenziert werden.

$S_{conv}$ repräsentiert die Filtermatrix, die durch elementweise Multiplikation des anhand des Grauwerts ausgewählten Convolvers mit der Erlaubnismaske erhalten wurde.

Die Akkumulation der Momente erfolgt innerhalb der Grenzen der Nachbarschaft, z.B. 7x7. Die Gleichungen (7)-(14) sowie die Definitionen für CONV und EN beschreiben einen optimalen Filter.

Gemäß einer Weiterbildung der Erfindung ist die Recheneinrichtung demgemäß dazu eingerichtet, die zweiten Ausgangssignale entsprechend der obigen Gleichungen (7) bis (14) zu filtern und ein geglättetes Ausgangssignal auszugeben. Der Wert $\Delta F_{filtered}$ stellt dabei den Wert dar, um welchen das zweite Ausgangssignal korrigiert wird.

Der Ausdruck (7) kann allerdings in zwei Fällen entarten, indem der Nenner Null wird. Im ersten Fall ist die Anzahl der durch die Erlaubnismatrix EN erlaubten Punkte kleiner als 3. In diesem Fall braucht aber keine Approximation ausgeführt zu werden und der Originalpunkt verbleibt. In Weiterbildung dieser Ausführungsform der Erfindung ist daher die Recheneinrichtung entsprechend dazu ausgebildet, für den Fall, dass höchstens zwei Bildbereiche in der Nachbarschaft eines zentralen Bildbereichs als mit dem zentralen Bildbereich erkannt werden, keine Filterung vorzunehmen.

Im zweiten Fall liegen lediglich die Projektionen sämtlicher durch die Erlaubnismaske EN zugelassenen Punkte $P_n$ auf der XY- Ebene exakt auf einer Geraden. Folglich bilden diese Punkte eine Ebene, die senkrecht auf der XY-Ebene steht. Eine Approximation des Funktionswerts kann hier durch eine Gerade innerhalb dieser Ebene erfolgen.

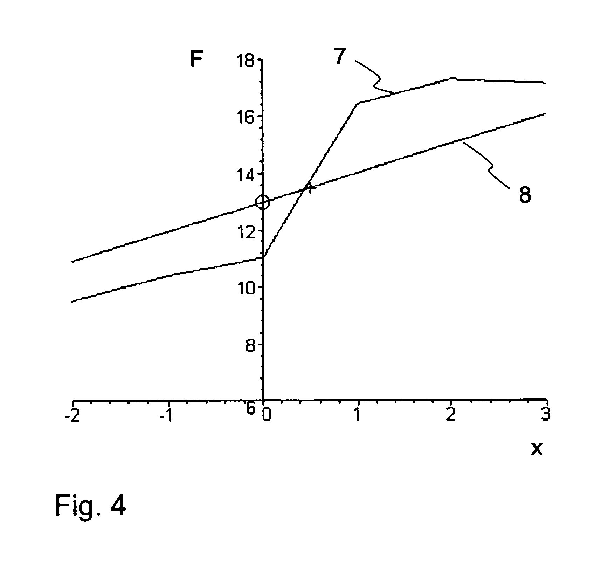

Fig. 4 zeigt dazu einen Graph, bei welchem ähnlich wie in den Fig. 3A, 3B die zweiten Ausgangssignale als Funktion des Orts aufgetragen sind. Da in diesem Beispiel deren zugehörige Ortskoordinaten auf einer Geraden liegen, wurde eine zweidimensionale Darstellung gewählt.

Bei dem in Fig. 4 gezeigten Beispiel wurde angenommen, dass die relativen y- Koordinaten sämtlicher Punkte $P_n$ null sind. In diesem Fall werden die Punkte in der XY- Ebene auf die X- Achse projiziert, man erhält eine Funktion 7, die durch eine Gerade 8 mit einem Bestfitalgorithmus approximiert werden kann. Für eine solche Gerade gilt:

$$(15) \quad \Delta F_{filtered} = \frac{-\mu_{2x}\,\mu_{1z} + \mu_{1x}\,\mu_{11xz}}{\mu^2_{1x} - \mu_{2x}S_{conv}}$$

Neben dieser Lage der Geraden bestehen weitere Möglichkeiten für die Lage der Geraden, die sich direkt aus dem Faltungskern $CONV_{i,j}$, beziehungsweise der Filtermatrix ablesen lassen. Zum Beispiel führt ein Faltungskern der Form

$$CONV_{i,j} = \begin{bmatrix} 0 & 0 & 1 \\ 0 & 1 & 0 \\ 1 & 0 & 0 \end{bmatrix}$$

zu einer um 45° gedrehten Geraden. Die Berechnung erfolgt ebenfalls analog Gleichung (15), mit entsprechend zu ersetzenden Momenten.

Das Filterergebnis entsteht durch Addition des Funktionswerts $F_{k,0}$ des Zentralpunkts des Kanals k:

$$F_{k,filtered} = \Delta F_{k,filtered} + F_{k,0}$$

Die Kanäle entsprechen der Anzahl der pro Bildbereich ausgegebenen zweiten Ausgangssignale. Wie bereits oben dargestellt, basieren viele 3D-Sensoren auf einer Bestimmung der Höheninformation anhand von zwei zweiten Ausgangssignalen. Für solche Sensoren gilt dann $k \in \{1,2\}$.

Nach Berechnung der beiden gefilterten Funktionswerte von $F_1(x,y)$ und $F_2(x,y)$ erfolgt die Berechnung der Distanz nach der für den jeweiligen Sensortyp vorgeschriebenen Methode.

Grundsätzlich ist auch die Anwendung des Verfahrens im verarbeiteten Signal, beispielsweise anhand der aus den Ausgangssignalen bereits errechneten Höheninformation möglich, hierbei kann jedoch durch Division kleiner Signale ein höherer Rauschbeitrag entstehen. Insbesondere Bereichsüberschreitungen der Periode bei rauschenden dunklen Objekten sind für die weitere Verarbeitung sehr hinderlich. Dies kann vermieden werden, wenn erfindungsgemäß das Signal/Rauschverhältnis vor Anwendung nichtlinearer Transformationen korrigiert wird.

In einer weiteren besonders vorteilhaften Ausprägung kann das zur Rauschunterdrückung eingesetzte Verfahren auch zur Vorverarbeitung, insbesondere Segmentierung der gefilterten 3D- Daten eingesetzt werden. Hierbei wird als Eingangsgröße die gefilterte Distanzinformation

$$dist(x,y) = f(F_{1,filtered}, F_{2,filtered})$$

verwendet. Es werden ebenfalls die Approximationsparameter einer Ebene in der Hesse-Form berechnet. Vorteilhaft ist, dass die zur Berechnung der Momente verwendete Hardware identisch zu der für die Rauschoptimierung gemäß dem erfindungsgemäßen Verfahren gewählt werden kann. Die Auswahl des Convolverkerns kann von der Applikation abhängig gemacht werden. Im einfachsten Fall wird ein konstanter Kern, beziehungsweise Convolver verwendet.

Über $dist(x,y)$ können mit dem oben beschriebenen Verfahren die Momente berechnet werden, der Verlauf von $dist(x,y)$ kann somit ebenfalls durch eine Ebenenapproximation dargestellt werden. In diesem Fall ist es sinnvoll, die Komponenten des Normalenvektors $\vec{N}(x,y)$ zu berechnen.

(16):

$$nx = \mu_{1X}(\mu_{2Y}\mu_{2Z} - \mu^2_{11YZ}) + \mu_{1Y}(\mu_{11XZ}\mu_{11XY} - \mu_{2Z}\mu_{11XY}) + \mu_{1Z}(\mu_{11XY}\mu_{11YZ} - \mu_{2Y}\mu_{11XZ})$$

$$ny = \mu_{1X}(-\mu_{11XY}\mu_{2Z} + \mu_{11YZ}\mu_{11XZ}) + \mu_{1Y}(\mu^2_{11XZ} + \mu_{2Z}\mu_{2X}) + \mu_{1Z}(-\mu_{11YZ}\mu_{2X} + \mu_{11XY}\mu_{11XZ})$$

$$nz = \mu_{11YZ}(\mu_{11XY}\mu_{1X} - \mu_{2X}\mu_{1Y}) + \mu_{11XZ}(\mu_{11XY}\mu_{1Y} - \mu_{2Y}\mu_{1X}) + \mu_{1Z}(\mu_{2X}\mu_{2Y} - \mu_{11XY}^2)$$

Die Komponenten können auf einen Einheitsvektor $\vec{N}$ normiert werden:

$$(17)\quad \vec{N} = \left[\frac{nx}{\sqrt{nx^2 + ny^2 + nz^2}}, \frac{ny}{\sqrt{nx^2 + ny^2 + nz^2}}, \frac{nz}{\sqrt{nx^2 + ny^2 + nz^2}}\right]$$

durch Einsetzen in (5) erhält man ferner den Offset λ.

Diese Darstellung ist besonders vorteilhaft für die weitere Verarbeitung.

Aus diesem Grund ist es zweckmäßig, wenn die erfindungsgemäße Vorrichtung dazu eingerichtet ist, neben den Grauwert- sowie Distanz-, bzw. 3D- Daten zusätzlich den Normalenvektor und den offset λ bereitzustellen. Diese Parameter beschreiben dann eine lokal an den zum Bildbereich korrespondierenden Objektbereich angepasste Ebene gemäß der oben beschriebenen Hesseform nach Gleichung (5), wobei der Normalenvektor der Normalenvektor dieser Ebene ist und der Offset den Abstand der Ebene zum Ursprung angibt. Der Ursprung kann dabei willkürlich gewählt sein. Beispielsweise kann ein vorbestimmter Abstand zur Bildebene als Ursprung festgelegt werden. Der Normalenvektor kann, muss aber nicht zwangsläufig in Form eines Einheitsvektors ausgegeben werden.

Gemäß noch einer Weiterbildung der Erfindung können diese Daten über eine Kommunikationsschnittstelle bereitgestellt werden, um diese an eine Datenverarbeitungsvorrichtung zu übertragen. Beispielsweise können die derart ausgebildeten Daten im Bilddatenstrom einer als TOF- Kamera ausgebildeten erfindungsgemäßen Vorrichtung übertragen werden.

Mit diesen Approximationsdaten ist eine besonders einfache und stabile Segmentierung von Bilddaten möglich, da die Komponenten des Einheitsvektors $\vec{N}$ ähnlich einem Farbwert einer ebenen oder wenig gewölbten Fläche annähernd konstant sind. Man erhält stabile Zusatzmerkmale, die z.B. mit den aus der Grauwert- und Farbverarbeitung bekannten Clusterverfahren verarbeitet werden können.

Unter Nutzung dieser Daten können auf besonders einfache Weise Objekte nach ihrer Orientierung gefiltert werden. Z.B. ergibt jede Ebene in einem einfachen zweidimensionalen Histogramm [nx,ny] ein lokales Maximum. Auf dieses Weise kann eine effiziente Verarbeitung von 3D- Daten für Positioniervorgänge in der Robotik realisiert werden.

Es können auch dreidimensionale Histogramme im Raum {nx,ny,λ} erzeugt werden, hierzu sind eine Reihe von sehr effizienten Methoden aus der Farbclusterverarbeitung im {R,G,B} - Raum bekannt, die in Analogie angewendet werden können.

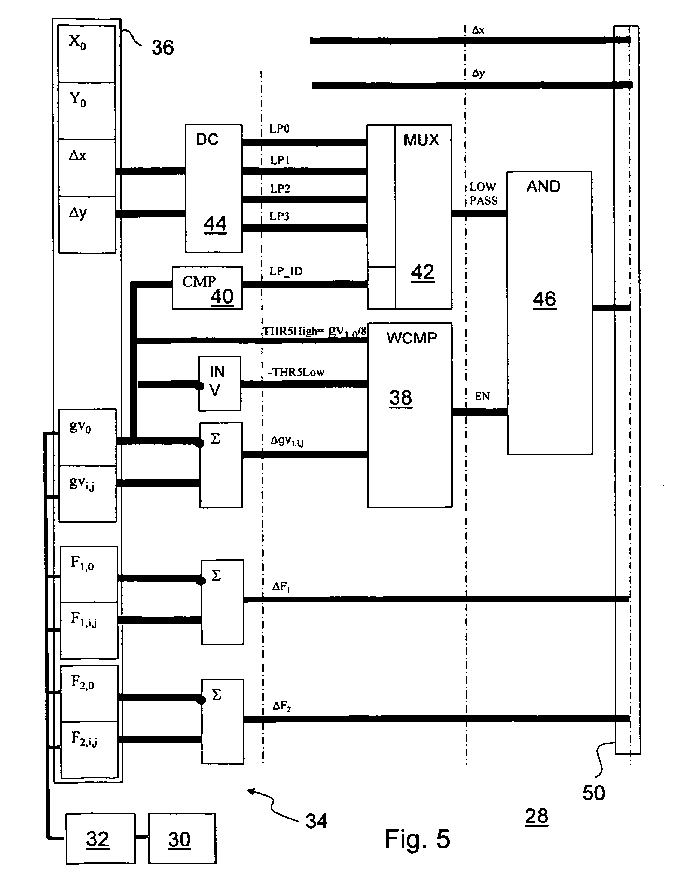

Nachfolgend wird eine Hardware-Implementierung der erfindungsgemäßen Signalverarbeitung in einer erfindungsgemäßen Vorrichtung 28 beschrieben. Fig. 5 zeigt einen Teil der Vorrichtung 28 in Form eines Blockschaltbilds.

Die zweiten Ausgangssignale des Sensors 30, $F_1$ und $F_2$ sowie der Grauwert werden in einem Speicher 32, vorzugsweise Dualport-RAM abgelegt. Üblicherweise wird eine Wortbreite von 10-16 bit verwendet, die Signale können deshalb in einer 32 bis 48 Bit breiten Datenstruktur sinnvoll gespeichert werden. Für einen typischen 3D-Sensor werden zur Zeit Bildpunktraten bis 4 MHz verwendet, ein für die Verarbeitung eingesetzter typischer FPGA kann mit einer Taktrate von 200MHz eine 16-Bit Addition verarbeiten, die Struktur des Pipelineprozessors 34 als Bestandteil der Recheneinrichtung kann hierauf angepasst werden. Natürlich können durch teilweise Parallelisierung von Modulen auch höhere Taktraten erreicht werden.

Im Dualport- RAM 32 werden die Daten des Sensors 30 zeilenweise gespeichert. Über den zweiten Port dieses Dualport-RAMs kann innerhalb eins Schreibtakts (4MHz) eine vollständige 7x7 Umgebung (200MHz) ausgelesen und als sequentieller Datenstrom bereitgestellt werden. Durch Vergrößerung des serialisierten Speicherbereichs von 7x7 auf 8x8 und Verwendung von 4 statt einer Verarbeitungseinheit kann die Datenrate etwa um den Faktor 4 vergrößert werden. Im Beispiel wird jedoch nur eine Verarbeitungseinheit als Bestandteil der Recheneinrichtung 34 gezeigt. Die Koordinaten des jeweils verarbeiteten zentralen Bildbereichs (nachfolgend als Zentralpunkt bezeichnet) der 7x7 Umgebung sowie die Signale $F_1$ und $F_2$ des Zentralpunkts werden in einem Register 36 gespeichert, z.B. im vorangegangenen Zyklus. Diese so erzeugten Daten werden mit einem ersten Pipelinemodul verarbeitet.

Am Eingang des ersten Pipelinemoduls liegt innerhalb eines Zyklus von im Beispiel 49 Takten eine vollständige Beschreibung des Zentralpunkts, d.h. $X_0$, Yo, $F_{1,0}$, $F_{2,0}$, $gv_0$ (Grauwert des Zentralpunkts) und der Nachbarschaft mit $F_{1,i,j}$, $F_{2,i,j}$ und $gv_{i,j}$ vor. Die Ansteuerung gewährleistet die Datengültigkeit des Zentralpunkts zu Beginn des Zyklus.

Die Adressen der Nachbarschaft i,j werden in relative Koordinaten $\Delta x$, $\Delta y$ umformatiert, der Zentralpunkt hat die Koordinaten [0,0]. Zur Normierung wird ferner vom einlaufenden Datenstrom der Funktionswert des Zentralpunkts subtrahiert. Daraus ergeben sich die Signale $\Delta F_1$ und $\Delta F_2$. Die Indizes i,j werden im Folgenden weggelassen, da sämtliche Daten zeitlich synchron verarbeitet werden.

Die Zusammenhangswahrscheinlichkeit wird mit einem Fensterkomparator WCMP, Bezugszeichen 38, geprüft. Aus dem Grauwert des Zentralpunkts werden zwei Schwellen THR5Low und THR5High berechnet, im Beispiel wurde eine Fensterbreite von $-1/8gv_0$ bis $+1/8gv_0$ fest eingestellt. Der Fensterkomparator 38 vergleicht nun entsprechend der oben angegebenen Gleichung (2), ob die Grauwertdifferenz zwischen dem Rand- und Zentralpunkt innerhalb des Fensters liegt.

Aus dem Grauwert des Zentralpunkts $gv_0$ wird mit Hilfe mehrerer Komparatoren, die im Block CMP, Bezugszeichen 40, zusammengefasst wurden, der Index LP_ID für den ausgewählten Lowpassfilter bestimmt. Innerhalb des Blocks 40 wird der Grauwert gv0 mit den Schwellen THR0..3 verglichen, das Ergebnis wird intern als Adresse für einen Multiplexer 42 codiert.

Der für die Darstellung der Convolver verwendete Datenstrom wird mit einem Decoder DC, Bezugszeichen 44, bereitgestellt, der aus den relativen Koordinaten $\Delta x$ oder $\Delta y$ die Convolverwerte berechnet. Der Kanal LP3 kann z.B. konstant auf den Wert 1 gesetzt werden. Oder der Kanal LP2 wird auf den Wert 1 gesetzt mit Ausnahme der Positionen, auf denen der Betrag von $\Delta x$ oder $\Delta y$ gleich 3 ist. Vergleichbares ergibt sich für die Kanäle LP1 und LP0. Aus dem vom Decoder DC, 44, bereitgestellten Datenstrom der vier Convolver wird der passende mithilfe des Multiplexers MUX und der Adresse LP_ID ausgewählt.

Abschließend werden die Datenströme des Filters LOWPASS, beziehungsweise aus dem Multiplexer 42 und dem Filter EN, beziehungsweise dem Fensterkomparator 38 multipliziert. Da die Wortbreite von EN nur 1 bit beträgt, genügt eine AND-Verknüpfung, welche im Gatter 46 durchgeführt wird. Am Ausgang des Moduls stehen damit die relativen Koordinaten, die relativen Funktionswerte sowie ein Convolver entsprechend einer Filtermatrix, wie sie durch elementweise Multiplikation eines vorbestimmten Convolvers mit einer Erlaubnismatrix erhalten wird, als Datenstrom 50 synchron zur Verfügung.

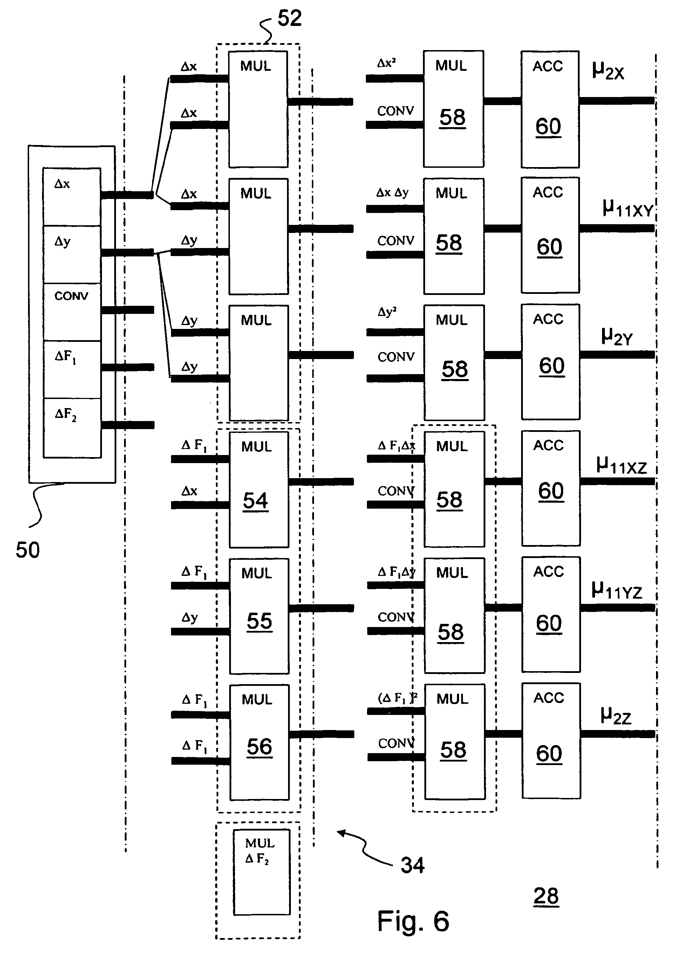

In einem zweiten, in Fig. 6 gezeigten Verarbeitungsmodul der Recheneinrichtung 34 wird der Datenstrom 50 der Nachbarschaft weiter aufbereitet. Hierzu erfolgt zunächst die Multiplikation der relativen Koordinaten $\Delta x$, $\Delta y$. Diese Daten haben nur eine geringe Wortbreite und können deshalb mit einfachen Multiplikator-Strukturen 52, z.B. mit kleinen Tabellen oder einfachen Addern berechnet werden, ohne dass aufwendige Hardwaremultiplizierer eingesetzt werden müssen. Wegen der höheren Wortbreite der Funktionswerte werden Hardwaremultiplizierer 54, 55, 56 für deren Verarbeitung verwendet. Auch hier ist die benötigte Wortbreite mit typisch kleiner 8 bit gering. Mit Ausnahme des Quadrierers 56 können aber auch hier Adder sinnvoll eingesetzt werden.

An jedem Multiplizierer ist ein zweiter Multiplizierer 58 nachfolgend geschaltet, der die Multiplikation mit dem Convolverwert ausführt. Für die im Beispiel gezeigten Convolverwerte als Zweierpotenzen genügt ein Multiplexer.

Anschließend werden die Ausgangswerte der zweiten Multiplizierer innerhalb des jeweiligen Zyklus der Nachbarschaft mit Akkumulatoren 60 akkumuliert, so dass am Zyklusende in den Akkumulatoren 60 die berechneten Momente verfügbar sind.

Die Verarbeitung der beiden Signalkomponenten $F_1$ und $F_2$ ist identisch und wurde deshalb nur einmal gezeigt.

Ferner existieren nicht gezeigte Akkumulatoren, die die Signale $\Delta x$, $\Delta y$, $\Delta F_1$, $\Delta F_2$ und CONV ohne Zwischenschaltung von Multiplizierern akkumulieren und damit die Momente

$$\mu_{1X}, \mu_{1Y}, \mu_{1F_1}, \mu_{1F_2}, S_{CONV}$$

berechnen. Nach dem letzten Element der Nachbarschaft werden die Daten aus sämtlichen Akkumulatoren abgetastet und für jeweils einen Zyklus in einem Registersatz gespeichert.

Für die dann folgende Berechnung des Ausdrucks (7) stehen ca. 50 Takte zur Verfügung. Die Berechnung ist bei Einsatz von Festkomma-Hardwaremultiplizierern, wie sie in modernen FPGA zur Verfügung stehen, in dieser Zeit unkompliziert möglich. Hierbei können insbesondere bei der Verarbeitung der Terme, die keinen Anteil von Z enthalten, starke Vereinfachungen durchgeführt werden. Die Division erfordert deutlich weniger als 16 bit Auflösung, so dass hierfür ebenfalls ein Standardmultiplizierer eingesetzt werden kann. Gemäß noch einer Weiterbildung der Erfindung erfolgt die Berechnung des Ausdrucks nach Gleichung (7) daher in einem FPGA als Bestandteil der Recheneinrichtung innerhalb von weniger als 75, vorzugsweise weniger als 60 Systemtakten des FPGA. Für schnellere Applikationen mit weniger als 50 Takten pro Verarbeitungs-Zyklus eines Pixels, beziehungsweise der Pixel-Taktrate ist eine partielle oder vollständige Parallelisierung der Verabeitung von Vorteil, diese erfordert dann einen entsprechend höheren Hardwareaufwand. Die Entwurfsregeln eines solchen parallelisierten Systems sind grundsätzlich bekannt. Die Verarbeitungszeit eines derzeit erhältlichen FPGA ist typischerweise mindestens 50 mal höher als die Pixel-Taktrate eines Sensors. Daher erlaubt die Erfindung bei einer Verarbeitung der Daten innerhalb von 50 Systemtakten des FPGA eine Verarbeitung in Echtzeit.

Abschließend werden die gefilterten Werte mit jeweils einem Adder für den Zähler und den Nenner addiert.

Die Berechnung der Distanzdaten aus den gefilterten Komponenten erfolgt nach dem für den jeweiligen Sensor vorgeschriebenen Verarbeitungsprinzip.

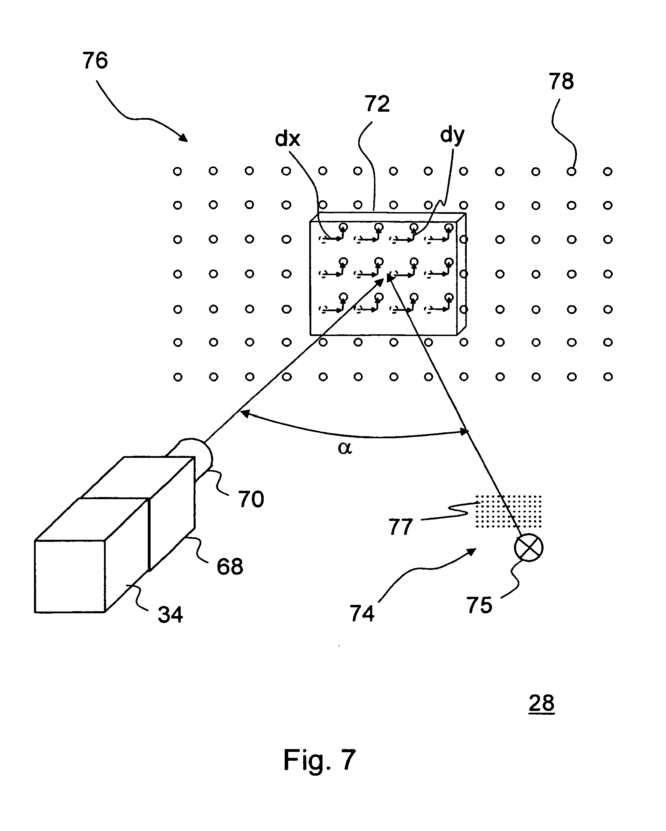

Nachfolgend wird anhand von Fig. 7 eine Ausgestaltung der Erfindung in Form eines Triangulations-Sensorsystems beschrieben.

Diese Ausführungsform der Erfindung basiert darauf, ein Objekt strukturiert zu beleuchten, so dass ein Beleuchtungsmuster unter einem Winkel zur optischen Achse der Kamera projiziert wird. Mit einer Recheneinrichtung werden Verschiebungsvektoren [dx,dy] der Strukturelemente des Beleuchtungsmusters auf dem Objekt bestimmt und als zweite Ausgangssignale für die weitere, wie oben beschriebene Filterung bereitgestellt.

Die Vorrichtung 28 umfasst eine Matrixsensor-Kamera 68 mit Objektiv 70 und an der Kamera angeschlossener oder in die Kamera 68 integrierter Recheneinrichtung 34. Das Objektiv 70 ist auf ein Objekt 72 gerichtet, welches auf den Matrixsensor der Kamera 68 abgebildet wird.

Eine Beleuchtungseinrichtung 74 erzeugt ein strukturiertes Beleuchtungsmuster 76 mit Strukturelementen 78, hier beispielsweise in Form von Rasterpunkten. Das Beleuchtungsmuster 76 wird unter einem Winkel $\alpha$ zur optischen Achse, beziehungsweise zur Blickrichtung der Kamera 68 auf das Objekt 72 projiziert. Eine derartige Beleuchtungseinrichtung 74 kann beispielsweise mit einer Lichtquelle 75 und einer vorgeschalteten Maske 77 realisiert werden. Auf dem Objekt 72 verschieben sich aufgrund des Winkels zwischen Beleuchtung und Kamera im Bildfeld die Strukturelemente 78 gegenüber einer Referenzposition, beispielsweise gegenüber einer in Blickrichtung der Kamera dahinterliegenden Referenzebene jeweils um einen Wert dx in einer Richtung und einen Wert dy in einer dazu senkrechten Richtung. Von der Kamera 68 oder der angeschlossenen Recheneinrichtung 34 werden diese Verschiebungswerte ausgewertet und als zweite Ausgangssignale bereitgestellt. Diese Ausgangssignale werden dann in der Recheneinrichtung 34 erfindungsgemäß gefiltert. Zusätzlich wird der Grauwert der den Strukturelementen 78 zugeordneten Flächenelementen des Objekts 72 anhand der Helligkeit der Strukurelemente im Kamerabild ausgewertet und bereitgestellt.

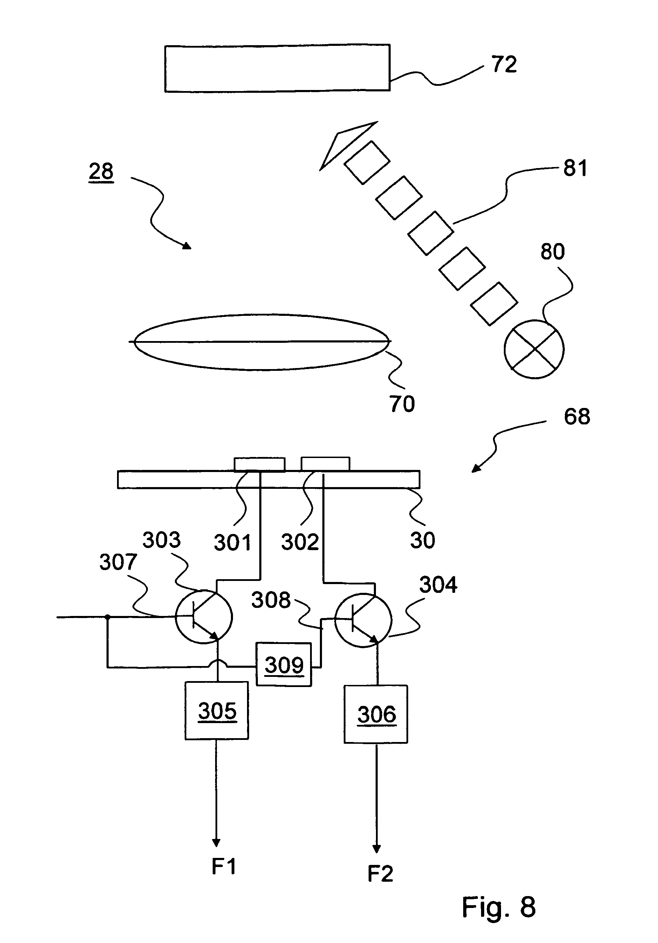

Fig. 8 zeigt eine weitere Ausführungsform der Erfindung mit einer als Flugzeit-Sensor ausgebildeten Kamera.

Gemäß dieser Ausführungsform der Erfindung wird das Objekt 72 mit einer in ihrer Intensität zeitlich periodisch modulierten Lichtquelle 80 beleuchtet. Dazu kann die Lichtquelle 80 periodisch an- und ausgeschaltet werden, so dass ein Lichtstrahl 81 in Form von sequentiellen Lichtpulsen erzeugt wird.

Der Matrixsensor umfasst eine Vielzahl von Pixeln, auf welche das Objekt 72 mittels des Objektivs 72 abgebildet wird. Zum Zwecke der Übersichtlichkeit sind in Fig. 8 nur zwei benachbarte Pixel 301, 302 dargestellt.

Jeder der Pixel 301, 302 ist über einen Schalter 303, beziehungsweise 304, vorzugsweise in Gestalt von Transistorschaltern an einen Integrator 305, beziehungsweise 306 angeschlossen. Die Schalter 303, 304 werden phasenverschoben, beziehungsweise zeitversetzt über Steuerleitungen 307, 308 angesteuert. Die Phasenverschiebung in der Ansteuerung kann beispielsweise über ein definiertes Delay 309 in einer der Steuerleitungen realisiert werden. Die Ansteuerung der Schalter wird in festem zeitlichen Verhältnis zur Modulation der Lichtquelle vorgenommen, so dass jeweils die lokale Objekthelligkeit zu zwei verschiedenen Zeitfenstern innerhalb der Modulationsperiode akkumuliert wird.

Aus den Integratoren 305, 306 werden nach der Bildaufnahme dann die Signale $F_1$ und $F_2$ als zweite Ausgangssignale zu dem auf den beiden Pixeln 301, 302 abgebildeten Objektbereich des Objekts 72 ausgelesen.

Gemäß dieser Ausführungsform der Erfindung ist demgemäß eine Flugzeit-Kamera, sowie eine Beleuchtungseinrichtung mit periodisch modulierter Intensität vorgesehen, wobei die Flugzeitkamera für die Bildbereiche des 3D-Bilds jeweils zwei zweite Ausgangssignale ausgibt, welche die akkumulierte lokale Objekthelligkeit in zwei verschiedenen Zeitfenstern innerhalb der Modulationsperiode repräsentieren.

**Patentansprüche**

**1.** Vorrichtung zur Ermittlung dreidimensionaler Objektkoordinaten mittels zumindest eines Sensors, umfassend

- zumindest eine Kamera mit einem Matrixsensor,
- und eine Daten- und Signalverarbeitungseinrichtung, welche die von der Kamera aufgenommenen Bilddaten verarbeitet,
- wobei die Kamera mehrere ortsabhängige Ausgangssignale liefert, wobei die Kamera dazu eingerichtet ist, jeweils für einen Bildbereich eines auf dem Sensor abgebildeten Objektbereichs ein erstes Ausgangssignal auszugeben, welches eine Funktion des Grauwerts ist, sowie zumindest ein zweites Ausgangssignal auszugeben, welches eine Funktion des Abstandes der Kamera zum im Bildbereich abgebildeten Objektbereich ist, und wobei

- die Daten- und Signalverarbeitungseinrichtung dazu eingerichtet ist, die zweiten Ausgangssignale, welche eine Funktion des Abstands zum Objektbereich sind, zu filtern, und
- Abstandswerte aus den zweiten Ausgangssignalen zu errechnen, wobei
- in der Daten- und Signalverarbeitungseinrichtung die Filterung der zweiten Ausgangssignale vor der Berechnung der Abstandswerte erfolgt, und wobei
- die Daten- und Signalverarbeitungseinrichtung zumindest einen Convolver zur Filterung der zweiten Ausgangssignale enthält, wobei mit dem Convolver ein zweites Ausgangssignal eines Bildbereichs mit weiteren zweiten Ausgangssignalen benachbarter Bildbereiche verrechnet wird, und
- wobei die Daten- und Signalverarbeitungseinrichtung dazu eingerichtet ist, eine Filterung mit dem Convolver vorzunehmen, wenn der durch das erste Ausgangssignal eines Bildbereichs repräsentierte Grauwert einen Grenzwert unterschreitet, und
- wobei die Daten- und Signalverarbeitungseinrichtung dazu eingerichtet ist, dreidimensionale Objektkoordinaten mit den unter Verwendung des Convolvers gefilterten zweiten Ausgangssignalen zu errechnen.

2. Vorrichtung gemäß dem vorstehenden Anspruch, wobei die Kamera jeweils für einen Bildbereich eines auf dem Sensor abgebildeten Objektbereichs zwei zweite Ausgangssignale ausgibt.

3. Vorrichtung gemäß einem der beiden vorstehenden Ansprüche, wobei

- die Signal- und Datenverarbeitungseinrichtung mehrere Convolver enthält, wobei
- die Convolver eine Faltung mit unterschiedlich großen Umgebungen des Bildbereichs bewirken, und wobei
- die Signal- und Datenverarbeitungsvorrichtung dazu eingerichtet ist, aus der Menge der gehaltenen Convolver einen Convolver anhand des Grauwerts des Bildbereichs auszuwählen, wobei
- die Auswahl derart erfolgt, dass mit fortschreitender Abnahme des Grauwerts eine Faltung des zweiten Ausgangssignals des Bildbereichs mit zweiten Ausgangssignalen aus fortschreitend größeren Nachbarschaften durchgeführt wird.

4. Vorrichtung gemäß dem vorstehenden Anspruch, wobei die Signal- und Datenverarbeitungseinrichtung folgende Convolver hält:

a) :

$$\begin{bmatrix} 0 & 0 & 0 & 0 & 0 & 0 & 0 \\ 0 & 0 & 0 & 0 & 0 & 0 & 0 \\ 0 & 0 & 0 & 0 & 0 & 0 & 0 \\ 0 & 0 & 0 & 1 & 0 & 0 & 0 \\ 0 & 0 & 0 & 0 & 0 & 0 & 0 \\ 0 & 0 & 0 & 0 & 0 & 0 & 0 \\ 0 & 0 & 0 & 0 & 0 & 0 & 0 \end{bmatrix},$$

b) :

$$\begin{bmatrix} 0 & 0 & 0 & 0 & 0 & 0 & 0 \\ 0 & 0 & 0 & 0 & 0 & 0 & 0 \\ 0 & 0 & 1 & 2 & 1 & 0 & 0 \\ 0 & 0 & 2 & 4 & 2 & 0 & 0 \\ 0 & 0 & 1 & 2 & 1 & 0 & 0 \\ 0 & 0 & 0 & 0 & 0 & 0 & 0 \\ 0 & 0 & 0 & 0 & 0 & 0 & 0 \end{bmatrix},$$

c) :

$$\begin{bmatrix} 0 & 0 & 0 & 0 & 0 & 0 & 0 \\ 0 & 1 & 1 & 1 & 1 & 1 & 0 \\ 0 & 1 & 1 & 1 & 1 & 1 & 0 \\ 0 & 1 & 1 & 1 & 1 & 1 & 0 \\ 0 & 1 & 1 & 1 & 1 & 1 & 0 \\ 0 & 1 & 1 & 1 & 1 & 1 & 0 \\ 0 & 0 & 0 & 0 & 0 & 0 & 0 \end{bmatrix},$$

und
d) :

$$\begin{bmatrix} 1 & 1 & 1 & 1 & 1 & 1 & 1 \\ 1 & 1 & 1 & 1 & 1 & 1 & 1 \\ 1 & 1 & 1 & 1 & 1 & 1 & 1 \\ 1 & 1 & 1 & 1 & 1 & 1 & 1 \\ 1 & 1 & 1 & 1 & 1 & 1 & 1 \\ 1 & 1 & 1 & 1 & 1 & 1 & 1 \\ 1 & 1 & 1 & 1 & 1 & 1 & 1 \end{bmatrix}.$$

**5.** Vorrichtung gemäß einem der vorstehenden Ansprüche, **dadurch gekennzeichnet, dass** die Signal- und Datenverarbeitungseinrichtung dazu eingerichtet ist, aus einem Convolver eine Filtermatrix durch Überlagerung des Convolvers mit einer Erlaubnismaske zu bilden, indem diese die Elemente des Convolvers einzeln mit den Elementen der Filtermatrix verrechnet, wobei in die Filtermatrix Einträge eingetragen werden, welche angeben, welche der zu einem zu filternden zentralen Bildbereich benachbarten Bildbereiche mit dem zentralen Bildbereich zusammenhängen, und wobei die Signal- und Datenverarbeitungseinrichtung dazu eingerichtet ist, anhand eines Vergleichs der Grauwerte des zentralen Bildbereichs mit den benachbarten Bildbereichen festzustellen, ob eine hinreichend hohe Zusammenhangswahrscheinlichkeit der Bildbereiche besteht, wobei im Falle einer hinreichend hohen Zusammenhangswahrscheinlichkeit in der Erlaubnismatrix für den oder die mit dem zentralen Bildbereich benachbarten Bildbereiche ein Erlaubniswert eingetragen wird.

**6.** Vorrichtung gemäß vorstehendem Anspruch, wobei die Recheneinrichtung eingerichtet ist, für den zentralen Bildbereich und die zum zentralen Bildbereich benachbarten Bildbereiche gewichtete Momente zweiter Ordnung zu berechnen und aus den Momenten zweiter Ordnung ein oder mehrere gefilterte Signale mit der Höheninformation zu berechnen.

7. Vorrichtung gemäß vorstehendem Anspruch, wobei die Recheneinrichtung dazu eingerichtet ist, das zweite Ausgangssignal entsprechend folgender Gleichung zu filtern:

$$\Delta F_{filtered} = \frac{-\mu_{11XZ}^{2}\mu_{2Y} - \mu_{2Z}\mu_{11XY}^{2} + 2\mu_{11XY}\mu_{11XZ}\mu_{11YZ} + \mu_{2X}\mu_{2Y}\mu_{2Z} - \mu_{2X}\mu_{11YZ}^{2}}{\mu_{11YZ}(\mu_{11XY}\mu_{1X} - \mu_{2X}\mu_{1Y}) + \mu_{11XZ}(\mu_{11XY}\mu_{1Y} - \mu_{2Y}\mu_{1X}) + \mu_{1Z}(\mu_{2X}\mu_{2Y} - \mu_{11XY}^{2})} \frac{1}{S_{conv}}$$

wobei gilt:

$$\mu_{\alpha,\beta,X,Y} = \sum_{i}\sum_{j}(P_{n,X})^{\alpha}(P_{n,Y})^{\beta} CONV_{i,j} \quad,$$

$$\mu_{\alpha,\beta,X,Z} = \sum_{i}\sum_{j}(P_{n,X})^{\alpha}(P_{n,Z})^{\beta} CONV_{i,j} \quad,$$

$$\mu_{\alpha,\beta,Y,Z} = \sum_{i}\sum_{j}(P_{n,Y})^{\alpha}(P_{n,Z})^{\beta} CONV_{i,j} \quad,$$

$$\mu_{\alpha,X} = \sum_{i}\sum_{j}(P_{n,X})^{\alpha} CONV_{i,j} \quad,$$

$$\mu_{\alpha,Y} = \sum_{i}\sum_{j}(P_{n,Y})^{\alpha} CONV_{i,j} \quad,$$

$$\mu_{\alpha,Z} = \sum_{i}\sum_{j}(P_{n,Z})^{\alpha} CONV_{i,j} \quad,$$

und

$$S_{conv} = \sum_{i}\sum_{j} CONV_{i,j} \quad,$$

und wobei die Indizes X, Y, Z der Punkte $P_n$, also $P_{n,X}$, $P_{n,Y}$, $P_{n,Z}$, die X-, Y- und Z- Komponenten dieser Punkte bezeichnen, und wobei die Indizes $\alpha,\beta$ Exponenten darstellen, mit welchen die jeweiligen X, Y, oder Z-Komponenten der Punkte $P_n$ potenziert werden, und wobei die Elemente $CONV_{i,j}$ die einzelnen Elemente der Filtermatrix darstellen, und wobei das zweite Ausgangssignal um den Wert $\Delta F_{filtered}$ korrigiert wird.

8. Vorrichtung gemäß dem vorstehenden Anspruch, wobei die Berechnung der Größe $\Delta F_{filtered}$ in einem FPGA als Bestandteil der Recheneinrichtung innerhalb von weniger als 75 Systemtakten des FPGA durchgeführt wird.

**9.** Vorrichtung gemäß einem der vorstehenden Ansprüche, wobei die Vorrichtung dazu eingerichtet ist, neben Grauwert- und Distanz-Daten zusätzlich einen Normalenvektor N und einen Offset λ der Bildbereiche bereitzustellen, wobei der Offset und der Normalenvektor eine lokal an den zum jeweiligen Bildbereich korrespondierenden Objektbereich angepasste Ebene, wobei der Normalenvektor der Normalenvektor dieser Ebene und der Offset den Abstand der Ebene zu einem Ursprung darstellt.

**10.** Vorrichtung gemäß einem der vorstehenden Ansprüche, wobei die Filterung mit dem Convolver in einem FPGA implementiert ist.

**11.** Vorrichtung gemäß einem der vorstehenden Ansprüche, **gekennzeichnet durch** eine Kamera mit Triangulationssensor, sowie einer Einrichtung zur strukturierten Beleuchtung eines Objekts, wobei ein Beleuchtungsmuster unter einem Winkel zur optischen Achse der Kamera projiziert wird, wobei eine Recheneinrichtung vorgesehen ist, welche Verschiebungsvektoren [dx,dy] der Strukturelemente des Beleuchtungsmusters auf dem Objekt bestimmt und als skalares Funktionspaar interpretiert und die Funktionswerte des skalaren Funktionspaars als zweite Ausgangssignale bereitstellt.

**12.** Vorrichtung gemäß einem der Ansprüche 1 bis 10, umfassend eine Flugzeit-Kamera, sowie eine Beleuchtungseinrichtung mit periodisch modulierter Intensität, wobei die Flugzeitkamera für die Bildbereiche des 3D-Bilds jeweils zwei zweite Ausgangssignale bereitstellt, welche die akkumulierte lokale Objekthelligkeit in zwei verschiedenen Zeitfenstern innerhalb der Modulationsperiode repräsentieren.

**13.** Verfahren zur Ermittlung dreidimensionaler Objektkoordinaten mittels einer Vorrichtung, welche

- zumindest eine Kamera mit einem Matrixsensor,
- und eine Daten- und Signalverarbeitungseinrichtung, welche die von der Kamera aufgenommenen Bilddaten verarbeitet, umfasst, insbesondere mittels einer Vorrichtung gemäß einem der vorstehenden Ansprüche,
- wobei die Kamera mehrere ortsabhängige Ausgangssignale liefert, und wobei die Kamera jeweils für einen Bildbereich eines auf dem Sensor abgebildeten Objektbereichs ein erstes Ausgangssignal ausgibt, welches eine Funktion des Grauwerts ist, sowie zumindest ein zweites Ausgangssignal ausgibt, welches eine Funktion des Abstandes der Kamera zum Objektbereich ist, und wobei
- die Daten- und Signalverarbeitungseinrichtung die zweiten Ausgangssignale, welche eine Funktion des Abstands zum Objektbereich sind, filtert, und
- Abstandswerte aus den zweiten Ausgangssignalen errechnet, wobei
- in der Daten- und Signalverarbeitungseinrichtung die Filterung der zweiten Ausgangssignale vor der Berechnung der Abstandswerte durchgeführt wird, und wobei
- die Daten- und Signalverarbeitungseinrichtung zumindest einen Convolver zur Filterung der zweiten Ausgangssignale enthält, und mit dem Convolver ein zweites Ausgangssignal eines Bildbereichs mit weiteren zweiten Ausgangssignalen benachbarter Bildbereiche verrechnet, und
- wobei die Daten- und Signalverarbeitungseinrichtung eine Filterung mit dem Convolver dann vornimmt, wenn der durch das erste Ausgangssignal eines Bildbbereichs repräsentierte Grauwert einen Grenzwert unterschreitet, und
- wobei die Daten- und Signalverarbeitungseinrichtung dann dreidimensionale Objektkoordinaten mit den unter Verwendung des Convolvers gefilterten zweiten Ausgangssignalen errechnet.

**Claims**

**1.** Device for determining three-dimensional object coordinates by means of at least one sensor, comprising

- at least one camera with a matrix sensor,
- and a data and signal processing device which processes image data recorded by the camera,
- whereby the camera delivers several location-dependent output signals, whereby the camera is set up to output a first output signal for an image area of an object area recorded on the sensor, said signal being a function of the gray value, as well as at least one second output signal, which is a function of the distance of the camera from the object area recorded in the image area, and whereby
- the data and signal processing device is set up to filter the second output signals, which are a function of the distance from the object area, and
- to calculate distance values from the second output signals, whereby

in the data and signal processing device the filtering of the second output signals is effected before the calculation of the distance values, and whereby
- the data and signal processing device contains at least one convolver to filter the second output signals, whereby a second output signal of an image area is calculated against further second output signals from neighboring image areas using the convolver, and
- whereby the the data and signal processing device is set up to perform a filtering operation with the convolver when the gray value represented by the first output signal of an image area falls below a limit value, and
- whereby the data and signal processing device is set up to calculate three-dimensional object coordinates with the second output signals filtered using the convolver.

2. Device in accordance with the above-mentioned claim, whereby the camera outputs two second output signals for each image area of an object area recorded on the sensor.

3. Device in accordance with one of the two above-mentioned claims, whereby

- the signal and data processing device contains several convolvers, whereby
- the convolvers effect a folding with different-sized environments of the image area, and whereby
- the signal and data processing device is set up to select one convolver from the number of convolvers on hand, on the basis of the gray value of the image area, whereby
- the selection is effected in such a way that as the gray value decreases, a folding of the second output signal of the image area with second output signals is effected from increasingly large neighborhoods.

4. Device in accordance with the above-mentioned claim, whereby the signal and data processing device holds the following convolvers:

a) :

$$\begin{bmatrix} 0 & 0 & 0 & 0 & 0 & 0 & 0 \\ 0 & 0 & 0 & 0 & 0 & 0 & 0 \\ 0 & 0 & 0 & 0 & 0 & 0 & 0 \\ 0 & 0 & 0 & 1 & 0 & 0 & 0 \\ 0 & 0 & 0 & 0 & 0 & 0 & 0 \\ 0 & 0 & 0 & 0 & 0 & 0 & 0 \\ 0 & 0 & 0 & 0 & 0 & 0 & 0 \end{bmatrix},$$

b) :

$$\begin{bmatrix} 0 & 0 & 0 & 0 & 0 & 0 & 0 \\ 0 & 0 & 0 & 0 & 0 & 0 & 0 \\ 0 & 0 & 1 & 2 & 1 & 0 & 0 \\ 0 & 0 & 2 & 4 & 2 & 0 & 0 \\ 0 & 0 & 1 & 2 & 1 & 0 & 0 \\ 0 & 0 & 0 & 0 & 0 & 0 & 0 \\ 0 & 0 & 0 & 0 & 0 & 0 & 0 \end{bmatrix}$$

c) :

$$\begin{bmatrix} 0 & 0 & 0 & 0 & 0 & 0 & 0 \\ 0 & 1 & 1 & 1 & 1 & 1 & 0 \\ 0 & 1 & 1 & 1 & 1 & 1 & 0 \\ 0 & 1 & 1 & 1 & 1 & 1 & 0 \\ 0 & 1 & 1 & 1 & 1 & 1 & 0 \\ 0 & 1 & 1 & 1 & 1 & 1 & 0 \\ 0 & 0 & 0 & 0 & 0 & 0 & 0 \end{bmatrix},$$

and
d) :

$$\begin{bmatrix} 1 & 1 & 1 & 1 & 1 & 1 & 1 \\ 1 & 1 & 1 & 1 & 1 & 1 & 1 \\ 1 & 1 & 1 & 1 & 1 & 1 & 1 \\ 1 & 1 & 1 & 1 & 1 & 1 & 1 \\ 1 & 1 & 1 & 1 & 1 & 1 & 1 \\ 1 & 1 & 1 & 1 & 1 & 1 & 1 \\ 1 & 1 & 1 & 1 & 1 & 1 & 1 \end{bmatrix}.$$

5. Device in accordance with one of the above-mentioned claims, **characterized in that** the signal and data processing device is set up to form a filter matrix from a convolver by overlaying the convolver with a permission mask, said mask calculating the elements of the convolver individually against the elements of the filter matrix, whereby entries are entered in the filter matrix specifying which of the image areas neighboring a central image area to be filtered is connected to the central image area, and whereby the signal and data processing device is set up to determine, on the basis of a comparison of the gray values of the central image area with the neighboring image areas, whether there is a sufficiently high probability of connection of the image areas, whereby, in the event of a sufficiently high probability of connection in the permission matrix, a permission value is to be entered for the image area(s) neighboring the central image area.

6. Device in accordance with the above-mentioned claim, whereby the calculating device is set up to calculate weighted second-order moments for the central image area and the image areas neighboring the central image area, and to calculate one or more filtered signals with the level information from the second-order moments.

7. Device in accordance with the above-mentioned claim, whereby the calculating device is set up to filter the second output signal according to the following equation:

$$\Delta F_{filtered} = \frac{-\mu_{11XZ}^{2}\mu_{2Y} - \mu_{2Z}\mu_{11XY}^{2} + 2\mu_{11XY}\mu_{11XZ}\mu_{11YZ} + \mu_{2X}\mu_{2Y}\mu_{2Z} - \mu_{2X}\mu_{11YZ}^{2}}{\mu_{11YZ}(\mu_{11XY}\mu_{1X} - \mu_{2X}\mu_{1Y}) + \mu_{11XZ}(\mu_{11XY}\mu_{1Y} - \mu_{2Y}\mu_{1X}) + \mu_{1Z}(\mu_{2X}\mu_{2Y} - \mu_{11XY}^{2})} \frac{1}{S_{conv}}$$

Where in:

$$\mu_{\alpha,\beta,X,Y} = \sum_{i} \sum_{j} (P_{n,X})^{\alpha} (P_{n,Y})^{\beta} CONV_{i,j} \quad,$$

$$\mu_{\alpha,\beta,X,Z} = \sum_i \sum_j \left(P_{n,X}\right)^\alpha \left(P_{n,Z}\right)^\beta CONV_{i,j} \quad,$$

$$\mu_{\alpha,\beta,Y,Z} = \sum_i \sum_j \left(P_{n,Y}\right)^\alpha \left(P_{n,Z}\right)^\beta CONV_{i,j} \quad,$$

$$\mu_{\alpha,X} = \sum_i \sum_j \left(P_{n,X}\right)^\alpha CONV_{i,j} \quad,$$

$$\mu_{\alpha,Y} = \sum_i \sum_j \left(P_{n,Y}\right)^\alpha CONV_{i,j} \quad,$$

$$\mu_{\alpha,Z} = \sum_i \sum_j \left(P_{n,Z}\right)^\alpha CONV_{i,j} \quad,$$

und

$$S_{conv} = \sum_i \sum_j CONV_{i,j} \quad,$$

and whereby the indices X, Y, Z of the points $P_n$, that is, $P_{n,X}$, $P_{n,Y}$, $P_{n,Z}$, designate the X, Y and Z components of these points, and whereby the indices $\alpha,\beta$ represent exponents with which the relevant X, Y, or Z components of the $P_n$ points are raised, and whereby the elements $CONV_{i,j}$ represent the individual elements of the filter matrix, and whereby the second output signal is corrected by the value $\Delta F_{filtered}$.

**8.** Device in accordance with the above-mentioned claim, whereby the calculation of the variable $\Delta F_{filtered}$ is effected in an FPGA as a component of the calculating device within less than 75 system cycles of the FPGA.

**9.** Device in accordance with one of the above-mentioned claims, whereby the device is set up to provide not only gray value and distance data but also a normal vector N and an offset $\lambda$ of the image areas, whereby the offset and the normal vector represent a plane adapted locally to the object area corresponding to the image area in question, whereby the normal vector of the normal vectors of this plane and the offset represent the distance of the plane from an origin.

**10.** Device in accordance with one of the above-mentioned claims, whereby the filtering with the convolver is implemented in an FPGA.

**11.** Device in accordance with one of the above-mentioned claims, **characterized by** a camera with triangulation sensor, as well as a device for the structured illumination of an object, whereby an illumination sample is projected below an angle to the optical axis of the camera, whereby a calculation unit is provided for to determine displacement vectors (dx, dy) of the structured elements of the illumination sample on the object, and interprets these as a scalar functional pair and provides the functional values of the scalar functional pair as second output signals.

**12.** Device in accordance with one of the claims 1 bis 10, comprising a flight time camera, as well as an illumination device with periodically modulated intensity, whereby the flight time camera provides two second output signals each for the image areas of the 3D image, which represent the accumulated local object brightness in two different time frames within the modulation period.

**13.** Procedure for determining three-dimensional object coordinates by means of a device which comprises

- at least one camera with a matrix sensor,
- and a data and signal processing device which processes image data recorded by the camera, in particular by means of a device in accordance with one of the above claims,
- whereby the camera delivers several location-dependent output signals, and whereby the camera outputs a first output signal for an image area of an object area recorded on the sensor, said signal being a function of the gray value, as well as at least one second output signal, which is a function of the distance of the camera from the object area, and whereby
- the data and signal processing device filters the second output signals, which are a function of the distance from the object area, and
- calculates distance values from the second output signals, whereby

in the data and signal processing device the filtering of the second output signals is effected before the calculation of the distance values, and whereby

- the data and signal processing device contains at least one convolver to filter the second output signals, and a second output signal of an image area is calculated against further second output signals from neighboring image areas using the convolver, and
- whereby the the data and signal processing device performs a filtering operation with the convolver when the gray value represented by the first output signal of an image area falls below a limit value, and
- whereby the data and signal processing device then calculates three-dimensional object coordinates with the second output signals filtered using the convolver.

**Revendications**

**1.** Dispositif permettant de déterminer des coordonnées-objet en trois dimensions à l'aide d'au moins un capteur, comprenant

- au moins une caméra pourvue d'un capteur matriciel,
- et un dispositif de traitement des données et des signaux qui traite les données d'images enregistrées par la caméra,
- la caméra générant plusieurs signaux de sortie indépendants de l'emplacement, la caméra étant conçue pour émettre pour chaque zone d'image d'un domaine d'objet représenté sur le capteur un premier signal de sortie, qui est une fonction de la valeur de gris, ainsi que pour émettre au moins un second signal de sortie, qui est une fonction de la distance entre la caméra et le domaine d'objet représenté dans la zone d'image, et
- le dispositif de traitement des données et des signaux étant conçu pour filtrer les seconds signaux de sortie, qui sont une fonction de la distance jusqu'au domaine d'objet, et
- pour calculer des valeurs de distance à partir des seconds signaux de sortie,
- dans le dispositif de traitement des données et des signaux, le filtrage des seconds signaux de sortie intervenant avant le calcul des valeurs de distance, et
- le dispositif de traitement des données et des signaux comprenant au moins un convolveur destiné à filtrer les seconds signaux de sortie, et avec le convolveur un second signal de sortie d'un domaine d'objet étant compensé avec d'autres seconds signaux de sortie de zones d'image voisines, et
- le dispositif de traitement des données et des signaux étant conçu pour procéder à un filtrage avec le convolveur lorsque la valeur de gris représentée par le premier signal de sortie d'une zone d'image est inférieure à une valeur limite, et
- le dispositif de traitement des données et des signaux étant conçu pour calculer des coordonnées-objet en trois dimensions avec les seconds signaux de sortie filtrés en utilisant le convolveur.

**2.** Dispositif selon la revendication précédente, dans lequel la caméra émet deux seconds signaux de sortie pour chaque zone d'image d'un domaine d'objet représenté sur le capteur.

**3.** Dispositif selon l'une des revendications précédentes, dans lequel

- le dispositif de traitement des signaux et des données contient plusieurs convolveurs,
- les convolveurs engendrent une convolution avec des environnements de tailles différentes de la zone d'image, et
- le dispositif de traitement des signaux et des données est conçu pour sélectionner parmi la quantité de convolveurs un convolveur à l'aide de la valeur de gris de la zone d'image,
- la sélection est telle qu'avec la diminution croissante de la valeur de gris, une convolution du second signal de sortie de la zone d'image est effectuée avec les seconds signaux de sortie à partir de voisinages de plus en plus grands.

4. Dispositif selon la revendication précédente, dans lequel le dispositif de traitement des signaux et des données présente les convolveurs suivantes :

a) :

$$\begin{bmatrix} 0 & 0 & 0 & 0 & 0 & 0 & 0 \\ 0 & 0 & 0 & 0 & 0 & 0 & 0 \\ 0 & 0 & 0 & 0 & 0 & 0 & 0 \\ 0 & 0 & 0 & 1 & 0 & 0 & 0 \\ 0 & 0 & 0 & 0 & 0 & 0 & 0 \\ 0 & 0 & 0 & 0 & 0 & 0 & 0 \\ 0 & 0 & 0 & 0 & 0 & 0 & 0 \end{bmatrix},$$

b) :

$$\begin{bmatrix} 0 & 0 & 0 & 0 & 0 & 0 & 0 \\ 0 & 0 & 0 & 0 & 0 & 0 & 0 \\ 0 & 0 & 1 & 2 & 1 & 0 & 0 \\ 0 & 0 & 2 & 4 & 2 & 0 & 0 \\ 0 & 0 & 1 & 2 & 1 & 0 & 0 \\ 0 & 0 & 0 & 0 & 0 & 0 & 0 \\ 0 & 0 & 0 & 0 & 0 & 0 & 0 \end{bmatrix},$$

c) :

$$\begin{bmatrix} 0 & 0 & 0 & 0 & 0 & 0 & 0 \\ 0 & 1 & 1 & 1 & 1 & 1 & 0 \\ 0 & 1 & 1 & 1 & 1 & 1 & 0 \\ 0 & 1 & 1 & 1 & 1 & 1 & 0 \\ 0 & 1 & 1 & 1 & 1 & 1 & 0 \\ 0 & 1 & 1 & 1 & 1 & 1 & 0 \\ 0 & 0 & 0 & 0 & 0 & 0 & 0 \end{bmatrix},$$

et
d) :

$$
\begin{bmatrix}
1 & 1 & 1 & 1 & 1 & 1 & 1 \\
1 & 1 & 1 & 1 & 1 & 1 & 1 \\
1 & 1 & 1 & 1 & 1 & 1 & 1 \\
1 & 1 & 1 & 1 & 1 & 1 & 1 \\
1 & 1 & 1 & 1 & 1 & 1 & 1 \\
1 & 1 & 1 & 1 & 1 & 1 & 1 \\
1 & 1 & 1 & 1 & 1 & 1 & 1
\end{bmatrix}.
$$

5. Dispositif selon l'une des revendications précédentes, **caractérisé en ce que** le dispositif de traitement des signaux et des données est conçu pour former à partir d'un convolveur une matrice de filtre en superposant le convolveur avec un masque d'autorisation, celui-ci compensant les éléments du convolveur avec les éléments de la matrice de filtre, des entrées étant effectuées dans la matrice de filtre, lesdites entrées indiquant lequel des domaines d'objet voisins d'une zone d'image à filtrer est en connexion avec la zone d'image centrale, et le dispositif de traitement des signaux et des données étant conçu pour établir, à l'aide d'une comparaison des valeurs de gris de la zone d'image centrale avec les zones d'images voisines, s'il existe une probabilité de connexion suffisamment élevée des zones d'image, en cas d'une probabilité de connexion suffisamment élevée dans la matrice d'autorisation pour la ou les zones d'image voisines de la zone d'image centrale, une valeur d'autorisation est entrée.

6. Dispositif selon la revendication précédente, dans lequel le dispositif de calcul est conçu pour calculer pour la zone d'image centrale et les zones d'image voisines de la zone d'image centrale des moments pondérés de second ordre et pour calculer à partir des moments de second ordre un ou plusieurs signaux filtrés avec les informations de hauteur.

7. Dispositif selon la revendication précédente, dans lequel le dispositif de calcul est conçu pour filtrer le second signal de sortie conformément à l'équation suivante :

$$
\Delta F_{filtered} = \frac{-\mu_{11XZ}{}^{2}\mu_{2Y} - \mu_{2Z}\mu_{11XY}{}^{2} + 2\mu_{11XY}\mu_{11XZ}\mu_{11YZ} + \mu_{2X}\mu_{2Y}\mu_{2Z} - \mu_{2X}\mu_{11YZ}{}^{2}}{\mu_{11YZ}(\mu_{11XY}\mu_{1X} - \mu_{2X}\mu_{1Y}) + \mu_{11XZ}(\mu_{11XY}\mu_{1Y} - \mu_{2Y}\mu_{1X}) + \mu_{1Z}(\mu_{2X}\mu_{2Y} - \mu_{11XY}{}^{2})} \frac{1}{S_{conv}}
$$

Qui est:

$$
\mu_{\alpha,\beta,X,Y} = \sum_{i}\ \sum_{j}\left(P_{n,X}\right)^{\alpha}\left(P_{n,Y}\right)^{\beta} CONV_{i,j}\ ,
$$

$$
\mu_{\alpha,\beta,X,Z} = \sum_{i}\ \sum_{j}\left(P_{n,X}\right)^{\alpha}\left(P_{n,Z}\right)^{\beta} CONV_{i,j}\ ,
$$

$$
\mu_{\alpha,\beta,Y,Z} = \sum_{i}\ \sum_{j}\left(P_{n,Y}\right)^{\alpha}\left(P_{n,Z}\right)^{\beta} CONV_{i,j}\ ,
$$

$$\mu_{\alpha,X} = \sum_i \ \sum_j \left(P_{n,X}\right)^{\alpha} CONV_{i,j} \quad ,$$

$$\mu_{\alpha,Y} = \sum_i \ \sum_j \left(P_{n,Y}\right)^{\alpha} CONV_{i,j} \quad ,$$

$$\mu_{\alpha,Z} = \sum_i \ \sum_j \left(P_{n,Z}\right)^{\alpha} CONV_{i,j} \quad ,$$

et

$$S_{conv} \quad = \sum_i \ \sum_j \ CONV_{i,j} \quad ,$$

et dans laquelle les indices X, Y, Z des points $P_n$, c'est-à-dire $P_{n,x}$. $P_{n,y}$, $P_{n,z}$, désignent les composants X, Y et Z de ces points, et dans laquelle les indices $\alpha$ représentent les exposants, avec lesquels les composants X, Y, ou Z des points $P_n$ sont élevés à la puissance, et dans laquelle les éléments $CONV_{i,j}$ représentent les différents éléments de la matrice de filtre, et dans laquelle le second signal de sortie est corrigé par la valeur $\Delta F_{filtered}$.

**8.** Dispositif selon la revendication précédente, dans lequel le calcul de la grandeur $\Delta F_{filtered}$ est réalisé dans un FPGA comme composant du dispositif de calcul dans une plage inférieure à 75 cycles de système du FPGA.

**9.** Dispositif selon l'une des revendications précédentes, dans lequel le dispositif est conçu pour fournir, outre des données de valeur de gris et de distance, un vecteur normal et un décalage $\lambda$ des zones d'image, le décalage et le vecteur normal présentant un plan adapté au domaine d'objet correspondant à chaque zone d'image, le vecteur normal de ce plan et le décalage représentant la distance du plan à une origine.

**10.** Dispositif selon l'une des revendications précédentes, dans lequel le filtrage avec le convolveur est mis en oeuvre dans un FPGA.

**11.** Dispositif selon l'une des revendications précédentes, **caractérisé par** une caméra pourvue d'un capteur de triangulation ainsi que d'un dispositif d'éclairage structuré d'un objet, un motif d'éclairage étant projeté à un angle par rapport à l'axe optique de la caméra, un dispositif de calcul étant prévu, lequel détermine les vecteurs de déplacement [dx,dy] des éléments de structure du motif d'éclairage sur l'objet et les interprète comme paire de fonctions scalaire et fournit les valeurs de fonction de la paire de fonctions scalaire en tant que seconds signaux de sortie.

**12.** Dispositif selon l'une des revendications 1 à 10, comprenant une caméra de temps de vol ainsi qu'un dispositif d'éclairage avec une intensité modulée périodiquement, la caméra de temps de vol fournissant pour les zones d'image de l'image en 3D deux seconds signaux de sortie qui représentent la luminosité d'objet locale accumulée dans deux fenêtres de temps différentes au sein de la période de modulation.

**13.** Procédé permettant de déterminer les coordonnées-objet en trois dimensions à l'aide d'un dispositif qui comprend

- au moins une caméra pourvue d'un capteur matriciel,
- et un dispositif de traitement des données et des signaux, qui traite les données d'image enregistrées par la caméra, en particulier à l'aide d'un dispositif selon l'une des revendications précédentes,
- la caméra générant plusieurs signaux de sortie indépendants de l'emplacement, et la caméra émettant pour chaque zone d'image d'un domaine d'objet représenté sur le capteur un premier signal de sortie, qui est une fonction de la valeur de gris, ainsi qu'un second signal de sortie, qui est une fonction de la distance entre la caméra et le domaine d'objet, et

- le dispositif de traitement des données et des signaux filtrant les seconds signaux de sortie, qui sont une fonction de la distance jusqu'au domaine d'objet, et

- calculant des valeurs de distance à partir des seconds signaux de sortie,

- dans le dispositif de traitement des données et des signaux, le filtrage des seconds signaux de sortie intervenant avant le calcul des valeurs de distance, et

- le dispositif de traitement des données et des signaux comprenant au moins un convolveur destiné à filtrer les seconds signaux de sortie, et avec le convolveur un second signal de sortie d'une zone d'image étant compensé avec d'autres seconds signaux de sortie de zones d'image voisines, et

- le dispositif de traitement des données et des signaux procédant ensuite à un filtrage avec le convolveur lorsque la valeur de gris représentée par le premier signal de sortie d'une zone d'image est inférieure à une valeur limite, et

- le dispositif de traitement des données et des signaux calculant ensuite des coordonnées-objet en trois dimensions avec les seconds signaux de sortie filtrés en utilisant le convolveur.

Fig. 1

Fig. 2A

Fig. 2B

Fig. 2C

Fig. 3A

Fig. 3B

Fig. 4

Fig. 5

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5150202 A
- DE 10238322 A1

- WO 2009097516 A